# EUROPÄISCHE PATENTSCHRIFT

(11) **EP 2 803 471 B1**
(45) Veröffentlichungstag und Bekanntmachung des Hinweises auf die Patenterteilung: **24.08.2016**
(21) Anmeldenummer: 13167457.4
(22) Anmeldetag: 13.05.2013
(51) Int. Cl.: B29C 51/26, B29C 51/30, B29C 51/34, B29C 51/02, B29C 51/10, B29C 51/12, B29C 51/42, B29C 51/28

(54) **Bearbeitungsmaschine zum Thermoformen eines thermoplastisch verformbaren Werkstückes**
Processing machine for thermoforming a thermoplastically deformable workpiece
Machine d'usinage pour le thermoformage d'une pièce à déformation thermoplastique

(43) Veröffentlichungstag der Anmeldung: 19.11.2014
(73) Patentinhaber: Trumpf GmbH + Co. KG, 71254 Ditzingen (DE)
(72) Erfinder: Schmauder, Frank, 72555 Metzingen (DE); Körber, Dr. Christian, 71679 Asperg (DE)
(74) Vertreter: Kohler Schmid Möbus Patentanwälte

(56) Entgegenhaltungen:
- EP-A1- 1 661 688
- EP-A1- 2 397 307
- WO-A1-02/055380
- WO-A2-2004/069508
- WO-A2-2009/145535
- DE-A1- 19 955 015
- US-A1- 2006 038 325
- DATABASE WPI Week 201126 Thomson Scientific, London, GB; AN 2011-D13965 XP002721681, -& JP 2011 056878 A (YASUI Y) 24. März 2011 (2011-03-24)
- DATABASE WPI Week 200134 Thomson Scientific, London, GB; AN 2001-325021 XP002721682, -& JP 2001 096613 A (KAWASAKI HEAVY IND LTD) 10. April 2001 (2001-04-10)

## Beschreibung

Die vorliegende Erfindung betrifft eine Bearbeitungsmaschine zum Bearbeiten eines thermoplastisch verformbaren, bevorzugt plattenartigen Werkstückes, insbesondere aus faserverstärktem Kunststoff.

Bei thermoplastischen Kunststoffen (sogenannte Thermoplaste bzw. Plastomere) handelt es sich um Kunststoffe, die sich in einem bestimmten Temperaturbereich (thermoplastisch) verformen lassen. Solange nicht durch Überhitzung eine thermische Zersetzung des Materials einsetzt, kann bei Thermoplasten eine Abkühlung und Wiedererwärmung reversibel durchgeführt werden. Beim Thermoformen werden thermoplastische Kunststoffe in ihrer äußeren Gestalt durch Wärme- und Druckeinwirkung verändert. Dazu wird der thermoplastische Kunststoff beispielsweise mit Hilfe von Heizstrahlern erwärmt, und der weiche Kunststoff wird mit Hilfe eines Druckmediums, beispielsweise Druckluft, gegen ein Formwerkzeug abgeformt. Die Ränder des in dieser Weise umgeformten Werkstücks können im Umformwerkzeug besäumt werden, es kann zu diesem Zweck aber auch in einer bspw. separaten Ausstanz- oder Laserstation bearbeitet werden.

In dem Artikel "Can lasers make the cut for trimming complex parts?" von Robert D. Leaversuch, Plastics Technology, Ausgabe vom April 2002 wird das "Thermoformen und Beschneiden in einer Linie" (engl, "in-line thermoforming and trimming") beschrieben. Im Vergleich zum herkömmlichen CNC-Fräsen als Trennverfahren soll durch die Anwendung der Laserschneid-Technologie ein besseres Schnitt-Ergebnis mit qualitativ hochwertigen Schnittkanten erzielt werden.

In dem Artikel "Prozessnahe Umformsimulation des Presshärtens mit LS-DYNA" von Christian Klimmek et al., LS-DYNA Anwenderforum, Frankenthal 2007 wird die Simulation der Umformung hochfester Stähle mittels eines Finite-Elemente-Ansatzes beschrieben. Dabei werden die Ergebnisse der Finite-Elemente-Simulation mit Messungen einer Thermographieanalyse verglichen. Zur Durchführung der Umformversuche und zur Umformung von Bauteilen wird ein modulares Werkzeugsystem eingesetzt. Dieses Werkzeugsystem ist in zwei Varianten einsetzbar: Bei der ersten Variante wird das Werkstück durch einen Stempel umgeformt, der in eine Matrize verfahren wird. Bei der zweiten Variante wird durch einen verfahrbaren Gegenstempel eine weitere Vertiefung in das umzuformende Werkstück eingebracht.

In dem Artikel "FIT-Hybrid-Verbund-Verfahren ist Innovation-Champion" (www.maschinenmarkt.vogel.de/themenkanaele/produktion/kunststoffverarbeitung_g ummiverarbeitung/articles/295177/) wird das so genannte FIT-Hybrid-Verbund-Verfahren beschrieben, das aufgrund einer Kombination eines Umformprozesses und eines Urformprozesses die Herstellung von Hohlkörpern aus Faserverbundkunststoffen, insbesondere von leichten Bauteilen für den Automobilbau, ermöglicht.

In der Pressemitteilung vom 02.11.2011 "Glas individuell biegen", Britta Widmann, Informationsdienst Wissenschaft, Fraunhofer-Gesellschaft, wird ein Biegeverfahren beschrieben, durch das einzelne unterschiedlich geformte Glaselemente herstellbar sind. Bei der Anwendung des Verfahrens kommt eine Form zum Einsatz, die sich je nach Anforderung wandelt. Zur Erzeugung eines gebogenen Glaselementes wird das Glaselement zusammen mit der Form in einen Ofen verbracht, wobei Auflagestellen der Form zunächst auf einer gemeinsamen Höhe angeordnet sind und die Temperatur zunächst unter derjenigen liegt, bei der das Glas zähflüssig wird. Ein Heißluftstrahl oder ein Laser erhitzt das Glas nur an den Stellen zusätzlich, die verformt werden sollen. Die Form nimmt nun die gewünschte Geometrie an, indem die Auflagestellen in der Höhe verfahren werden und das Glas entsprechend seiner Temperatur und der Auflageform nach unten sinken kann.

Aus der WO2011/032533 A1 ist ein Karosseriebauteil bekannt, das aus einer thermisch umgeformten, kontinuierlich faserverstärkten Kunststoffplatine besteht. Derartige durch gerichtete Endlosfasern verstärkte plattenartige Halbzeuge aus Thermoplasten (z.B. aus PA, PP, PPS, TPU) werden auch als Organobleche bezeichnet und haben ein im Vergleich zu herkömmlichen Blechen geringeres Gewicht bei verbesserten mechanischen Eigenschaften.

Die Verarbeitung von faserverstärkten Thermoplasten bzw. Organoblechen erfolgt heute in der Regel in aufwändig herzustellenden Serienwerkzeugen. Damit die Verarbeitung von Organoblechen durch diese Serienwerkzeuge rentabel ist, sollten möglichst Großserien bearbeitet werden. Allerdings zeigt die Praxis, dass auch die Bearbeitung von Organoblechen in Klein- und Kleinstserien gewünscht wird.

Aus der EP 2 397 307 A1 sind ein System sowie ein Verfahren zum Thermoformen von Platten bekannt geworden. Das System umfasst eine Thermoformstation zum Umformen der Platten sowie eine Beschickungsstation zum Zuführen der umzuformenden Platten zu der Thermoformstation. Zum gleichzeitigen Vortrocknen mehrerer umzuformender Platten weist das System eine für die gleichzeitige Aufnahme mehrerer umzuformender Platten ausgebildete Vortrocknungsstation auf, in welche die umzuformenden Platten ladbar und darin in vorbestimmter Weise zum Gewährleisten eines jeweiligen vorbestimmten Vortrocknungsprozesses erwärmbar sind.

### Aufgabe der Erfindung

Es ist die Aufgabe der vorliegenden Erfindung, eine Bearbeitungsmaschine bereitzustellen, mit der die Wirtschaftlichkeit bei der Verarbeitung von thermoplastisch verformbaren Kunststoffen, insbesondere von faserverstärkten Thermoplasten, erhöht werden kann.

### Gegenstand der Erfindung

Die Erfindung betrifft eine Bearbeitungsmaschine zum Bearbeiten eines thermoplastisch verformbaren, bevorzugt plattenartigen Werkstücks, insbesondere aus faserverstärktem Kunststoff, umfassend: eine Trenneinrichtung, insbesondere eine Laserschneideinrichtung, zum trennenden Bearbeiten des Werkstücks in einem ortsfesten Trennbereich, eine Umformeinrichtung zum Thermoformen des Werkstücks in einem ortsfesten Umformbereich, sowie eine Werkstückauflage zur Lagerung des Werkstücks, wobei die Werkstückauflage zum Transportieren des Werkstücks von dem Trennbereich in den Umformbereich und zurück verfahrbar ist, und wobei die Auflage eine verschließbare Öffnung aufweist, um das Werkstück beim Thermoformen zwischen einem Formwerkzeug zum Abformen des Werkstücks und einer Druckerzeugungseinrichtung zum Andrücken des Werkstücks gegen das Formwerkzeug zu lagern, die auf unterschiedlichen Seiten der Werkstückauflage angebracht sind.

Die Bearbeitungsmaschine ermöglicht eine flexible Bearbeitung von thermoplastisch verformbaren Werkstücken, indem das Werkstück von dem Trennbereich in den Umformbereich (und umgekehrt) verbracht werden kann, sodass ein trennendes Bearbeiten und das Thermoformen an einer einzigen Maschine verwirklicht werden kann, wodurch eine besonders hohe Wirtschaftlichkeit erreicht wird. Ist die Luke bzw. Öffnung in einer geöffneten Position, kann ein auf der Werkstückauflage aufliegendes bzw. dort gelagertes Werkstück durch die Öffnung hindurch von dem Formwerkzeug erfasst und mittels der Druckerzeugungseinrichtung gegen das Formwerkzeug abgeformt werden. Auf das Vorsehen einer zusätzlichen Handhabungseinrichtung kann somit verzichtet werden. Das Werkstück kann für den Transport an der Werkstückauflage festgelegt bzw. fixiert sein oder ohne eine solche Fixierung auf der Werkstückauflage abgelegt sein. Die Werkstückauflage kann als Positioniertisch ausgebildet sein, der von dem Trennbereich in den Umformbereich und zurück verfahrbar ist (engl. "sheet-mover").

Als Trenneinrichtung wird bevorzugt eine Laserschneideinrichtung verwendet, insbesondere ein CO₂-Laser oder ein Festkörperlaser. Zum Schutz von Bedienpersonen kann an der Bearbeitungsmaschine eine Abschirmungseinrichtung vorgesehen sein, die sich um den Trennbereich und ggf. um den Umformbereich erstrecken kann. Während des trennenden Bearbeitens und/oder des Umformens entstehende Emissionen (Werkstück-Spritzer, Brenngase, etc.) können durch eine Absaugeinrichtung aus der Bearbeitungsmaschine entfernt bzw. herausgefiltert werden.

Es hat sich als günstig erwiesen, wenn die verschließbare Öffnung einen variabel einstellbaren Öffnungsdurchmesser aufweist, was sich beispielsweise durch eine blendenartige Verschlussmechanik erreichen lässt. In der Regel steht das Werkstück nach dem Umformen über das Formwerkzeug seitlich über, so dass durch das Verringern des Öffnungsdurchmessers das umgeformte Werkstück randseitig auf der Verschlussmechanik abgelegt werden kann, bevor das Formwerkzeug durch die Öffnung in eine Ruhe- bzw. Rüstposition bewegt wird.

Bei einer bevorzugten Ausführungsform der Bearbeitungsmaschine sind das Formwerkzeug und/oder die Druckerzeugungseinrichtung zum Thermoformen des Werkstücks entlang einer Hubachse in eine Umformposition verfahrbar. Das Formwerkzeug und/oder die Druckerzeugungseinrichtung sind zu diesem Zweck in der Regel zumindest teilweise durch die Öffnung in der Werkstückauflage verfahrbar. In der Umformposition hat das Formwerkzeug, insbesondere durch ein Bewegen durch die Öffnung in der Werkstückauflage, das umzuformende Werkstück erfasst, so dass dieses einerseits an dem Formwerkzeug und andererseits an der Druckerzeugungseinrichtung anliegt. In der Umformposition wirkt die Druckerzeugungseinrichtung auf das Werkstück ein, um dieses gegen das Formwerkzeug abzuformen.

Bei einer bevorzugten Weiterbildung der vorhergehenden Ausführungsform ist das Formwerkzeug zum Austauschen von kappenförmigen Aufsatzelementen, die an Formgebungselementen des Formwerkzeugs gebildet sind, in eine Ruheposition unterhalb der Werkstückauflage verfahrbar. In der Ruheposition kann der Austausch von Aufsatzelementen mittels einer Werkzeug-Wechseleinrichtung vorgenommen werden, die beispielsweise als Revolver mit Linearachsen realisiert werden kann, um Aufsatzelemente aus einem Magazin zu entnehmen und direkt an einem Formgebungselement anzubringen bzw. von diesem zu entfernen.

Die Umformeinrichtung kann mindestens eine Heizeinrichtung zum Erwärmen des Werkstücks umfassen, wobei das Formwerkzeug zum Abformen des erwärmten Werkstücks unter Ausbildung einer dreidimensionalen Zielform des Werkstücks eine Mehrzahl von Formgebungselementen (s.o.) umfassen kann, die zur Ausbildung der Zielform voneinander unabhängig in jeweilige Zielpositionen bewegbar sind. Die Druckerzeugungseinrichtung dient zum Andrücken des erwärmten Werkstücks gegen das Formwerkzeug beim Abformen des Werkstücks.

Zum Umformen des Werkstücks wird das Werkstück durch die Heizeinrichtung erwärmt und gegen das Formwerkzeug abgeformt. Beim Abformen wird das Werkstück durch die Druckerzeugungseinrichtung gegen das Formwerkzeug angedrückt. Die Druckerzeugungseinrichtung wirkt über das dazwischenliegende Werkstück mit dem Formwerkzeug zusammen, indem die Druckerzeugungseinrichtung das Werkstück unter Druck gegen die Formgebungselemente presst und somit eine (typischerweise ebene) plattenartige Ausgangsform des Werkstücks in die Zielform umwandelt. Das Andrücken des erwärmten Werkstücks gegen das Formwerkzeug durch die Druckerzeugungseinrichtung erfolgt in der Regel mittels eines isostatisch wirkenden Anpressdrucks auf die dem Formwerkzeug abgewandte Seite des Werkstücks.

Durch den modularen Aufbau des Formwerkzeugs mit mehreren individuell bewegbaren Formgebungselementen kann in vorteilhafter Weise die dreidimensionale Zielform bzw. Zielgeometrie des Formwerkzeugs an eine jeweils unterschiedliche Zielgeometrie des Werkstücks angepasst werden, ohne dass zu diesem Zweck das gesamten Formwerkzeug umgerüstet werden muss bzw. für jede Zielgeometrie ein eigenes Formwerkzeug hergestellt werden muss. Durch die Umformeinrichtung ist eine variable Herstellung von umgeformten Werkstücken mit unterschiedlicher dreidimensionaler Geometrie in kurzer Zeit möglich, sodass faserverstärkte Thermoplaste in einer flexiblen Art und Weise umgeformt werden können. Dadurch wird die Wirtschaftlichkeit beim Thermoformen von faserverstärkten Thermoplasten deutlich erhöht, so dass die Verarbeitung von Faserverbundwerkstücken auch in kleinsten Losgrößen bis hin zur Einzelfertigung ermöglicht wird.

Sind die Formgebungselemente zur Ausbildung der dreidimensionalen Zielform in ihre jeweilige Zielposition verfahren und dort zugestellt (z.B. verrastet bzw. fixiert), bilden sie in der Regel eine kontinuierliche bzw. durchgängige (Freiform- bzw. Abformungs-)Fläche aus, die bevorzugt keine Stufen, Unstetigkeiten oder dergleichen aufweist. Bei mehreren entlang einer gemeinsamen Achse bzw. Achsrichtung (beispielsweise in Z-Richtung) individuell verstellbaren Formgebungselementen kann dies erreicht werden, wenn jeweils benachbarte Formgebungselemente in der Zielposition ohne einen Versatz entlang der gemeinsamen Achse aneinander anschließen, so dass eine hohe Genauigkeit bei der Umformung erreichbar ist. Als Formgebungselemente kann insbesondere eine Mehrzahl von entlang einer gemeinsamen Achsrichtung individuell verfahrbaren Kolben vorgesehen sein. Die Verstellung bzw. Bewegung der Formgebungselemente kann beispielsweise hydraulisch oder elektrisch durch Aktuatoren erfolgen.

Die Erwärmung des plattenartigen Werkstücks kann grundsätzlich ein- oder beidseitig erfolgen. Darüber hinaus kann die Erwärmung sowohl außerhalb als auch innerhalb des Umformwerkzeugs, d.h. in-situ erfolgen. Bevorzugt erfolgt der Wärmeeintrag in das Werkstück beidseitig, d.h. einerseits von der Seite des Formwerkzeugs in Richtung des Werkstücks und andererseits von der Seite der Druckerzeugungseinrichtung in Richtung des Werkstücks. Bevorzugt erfolgt die Erwärmung in-situ und besonders bevorzugt zusätzlich beidseitig.

Die Formgebungselemente können austauschbare (bzw. lösbare) kappenförmige Aufsatzelemente mit einer jeweiligen Abformungsfläche aufweisen, wobei die Abformungsflächen der Aufsatzelemente gemeinsam die Zielform des Werkstücks bilden, wenn die Formgebungselemente an der jeweiligen Zielposition positioniert sind. Die Austauschbarkeit der Aufsatzelemente ermöglicht die Anpassung der Formgebungselemente an eine jeweils lokal vorhandene Zielform bzw. Zielgeometrie unterschiedlicher Werkstücke. Auf diese Weise kann die dreidimensionale Zielgeometrie bzw. Zielform des Werkstücks durch das Formwerkzeug präziser angepasst werden als dies ohne Aufsatzelemente der Fall wäre. Die Aufsatzelemente sind kappenförmig bzw. als aufsetzbare Kappen ausgebildet.

Zum Bewegen (insbesondere Verfahren) der Formgebungselemente in ihre individuelle Zielposition kann die Umformeinrichtung eine Steuerungseinrichtung umfassen, die auf Informationen über die dreidimensionale Zielform des Werkstücks zurückgreift. Derartige Informationen können zum Beispiel in CAD-Datensätzen (CAD engl. für "Computer Aided Design") der gewünschten dreidimensionalen Werkstückgeometrie enthalten sein. Die Steuerungseinrichtung kann dann die beispielsweise als Freiformfläche definierte dreidimensionale Zielgeometrie in einem X-, Y-, Z-Koordinatensystem in einzelne Flächenelemente (in X und Y-Richtung) unterteilen, wobei jedem Flächenelement ein Formgebungselement zugeordnet wird. Die dreidimensionale Geometrie des Flächenelements (d.h. die den jeweiligen Positionen in X- und Y-Richtung zugeordnete Z-Koordinate bzw. die Höhenschnitte in X- und Y-Richtung) kann von der Steuerungseinrichtung analysiert werden und zur Auswahl bzw. zur Zuordnung eines geeigneten Aufsatzelements des Magazins zu dem jeweiligen Formgebungselement dienen. Die Zielgeometrie des gesamten Werkstücks legt hierbei die Z-Koordinate für die Zielposition eines jeweiligen Formgebungselements fest.

Mindestens eines der Aufsatzelemente kann Hinterschneidungen aufweisen. Hinterschneidungen sind quer zu einer Entformungsrichtung des Werkstücks gebildete Vorsprünge oder Absätze, die ein Entformen des Werkstücks in der Entformungsrichtung erschweren bzw. verhindern. Komplex geformte Werkstücke können Hinterschneidungen aufweisen und zur Ausbildung von entsprechend geformten Werkstücken müssen auch einzelne Aufsatzelemente mit Hinterschneidungen versehen werden. Für die Entformung erweist es sich als günstig, dass die Aufsatzelemente austauschbar bzw. lösbar mit den Formgebungselementen verbunden sind.

Die Umformeinrichtung kann ein Magazin zur Bevorratung von Aufsatzelementen und eine Wechseleinrichtung zum automatischen Austausch von Aufsatzelementen der Formgebungselemente des Formwerkzeugs gegen Aufsatzelemente des Magazins (und umgekehrt) umfassen. Durch das Magazin und die Wechseleinrichtung ist in vorteilhafter Weise ein automatischer Wechsel der Aufsatzelemente möglich, um die gewünschte Zielform des Werkstücks auszubilden. Für die Bearbeitung von Werkstücken mit unterschiedlicher Zielform werden - falls erforderlich - die jeweils an den Formgebungselementen angebrachten Aufsatzelemente gegen Aufsatzelemente aus dem Magazin ausgetauscht. In dem Magazin können Standard-Aufsatzelemente vorgesehen sein, welche eine Zielgeometrie aufweisen, die bei der Umformung häufig anzutreffen sind. Alternativ oder zusätzlich können in dem Magazin speziell für das Erzeugen einer einzigen Zielgeometrie angefertigte Aufsatzelemente vorgesehen werden. Dies ist insbesondere der Fall, wenn die Standard-Aufsatzelemente eine Annäherung der Zielform innerhalb vorgegebener Toleranzgrenzen nur unzureichend ermöglichen.

Anhand der vorgegebenen Zielform eines Werkstücks kann eine Steuerungseinrichtung erkennen, ob sich die vorgegebene Zielform mit den im Magazin vorhandenen oder dem Magazin von außen zuführbaren Aufsatzelementen innerhalb vorgegebener Toleranzgrenzen nachbilden lässt, indem die Zielgeometrie mit den vorhandenen bzw. zuführbaren Aufsatzelementen verglichen wird. Ist dies nicht der Fall, kann die Steuereinrichtung ggf. automatisiert eine Spezialanfertigung von Aufsatzelementen auslösen (beispielsweise durch Übermittlung der zu erzeugenden Zielgeometrie an einen Werkzeughersteller). Das Thermoformen des betreffenden Werkstücks kann in diesem Fall zurückgestellt werden, bis das bzw. die speziell angefertigten Aufsatzelemente eingetroffen sind und in das Magazin übergeben wurden.

Die Umformeinrichtung kann ferner eine flexible, insbesondere folienartige Schicht zur Bedeckung der Formgebungselemente beim Abformen des Werkstücks umfassen. In dem die Formgebungselemente bedeckenden Zustand passt sich die flexible Schicht an die Abformungsflächen an und erzeugt eine Approximation (z.B. eine Spline-Interpolation) der gewünschten Zielform des Werkstücks. Die flexible Schicht dichtet Freiräume ab, die eventuell zwischen den Formgebungselementen oder zwischen Aufsatzelementen, die auf die Formgebungselemente aufgesetzt sind, auftreten können. Die flexible Schicht bedeckt typischerweise alle Formgebungselemente, welche die dreidimensionale Zielform ausbilden bzw. definieren. Als flexible Schicht kann z.B. eine Folie oder eine (Heiz-)Decke eingesetzt werden. Durch das Vorsehen einer flexiblen, insbesondere elastischen Schicht können an den Aufsatzelementen gebildete Hinterschneidungen nachgebildet werden. Zur Erwärmung des Werkstücks kann die Heizeinrichtung eines oder mehrere in der flexiblen Schicht angeordnete Heizelemente aufweisen. Als Heizelement kann z.B. ein elektrisches, durch Konduktion Wärme übertragendes Heizelement in der flexiblen Schicht vorgesehen werden. Bevorzugt wird das Werkstück über Heizelemente in den zustellbaren Formgebungselementen erwärmt und/oder über eine als Strahlungsquelle ausgebildete Heizeinrichtung, die zur Strahlungserwärmung durch die Druckkammer dient.

Die Druckerzeugungseinrichtung kann auch mindestens eine Druckkammer umfassen, die durch eine dichtende Anlage an das Werkstück einen Druckraum ausbildet, wobei zum Andrücken des erwärmten Werkstücks gegen das Formwerkzeug der Druckraum mit einem gegenüber dem Umgebungsdruck erhöhten Druck beaufschlagbar ist. Durch einen einseitig auf das Werkstück einwirkenden isostatischen Überdruck wird das Werkstück gleichmäßig gegen das Formwerkzeug gepresst und somit eine formgetreue Abformung erreicht. Die Druckerzeugungseinrichtung kann beispielsweise eine, insbesondere halbkugelförmige, Druckkalotte umfassen, die einseitig an dem umzuformenden Werkstück anliegt bzw. gegen dieses gedrückt wird und die Druckkammer gegen die Umgebung abdichtet. Zur Abdichtung kann auch eine spezielle Dichtungseinrichtung vorgesehen sein. Zur Erzeugung des gegenüber der Umgebung erhöhten Drucks in der Druckkammer können Kompressoren eingesetzt werden, die ein gasförmiges Medium (beispielsweise Umgebungsluft) verdichten und in die Druckkammer befördern.

Die Druckerzeugungseinrichtung kann zum Andrücken des erwärmten Werkstücks gegen das Formwerkzeug eine zumindest teilweise (in einem dem Werkstück zugewandten Abschnitt) elastisch verformbare Druckzelle aufweisen. Die Flexibilität bzw. die elastische Verformbarkeit der Druckzelle ermöglicht die dreidimensionale Verformung des Werkstücks beim Thermoformen und vorteilhaft den Ausgleich von Relativbewegungen, die während des Thermoformens gegebenenfalls auftreten können. Derartige Relativbewegungen können z.B. bedingt durch eine seitliche Zufuhr von Material des thermoplastisch verformbaren, aufgrund der Faserverstärkung nicht fließfähigen Werkstücks beim dreidimensionalen Verformen zwischen dem Werkstück und dem Formwerkzeug sowie zwischen dem Werkstück und der Druckzelle auftreten. Auch können sich Relativbewegungen durch das Fließen des Matrixwerkstoffs des Thermoplasts bzw. durch das Wechselwirken des Matrixwerkstoffs mit der Faserverstärkung beim Erhitzen einstellen. Die elastisch verformbare Druckzelle kann beispielsweise in einer Druckkalotte (wie oben beschrieben) vorgesehen oder auf einen zum Andrücken gegen das Formwerkzeug verfahrbaren Presskolben aufgesetzt sein. In beiden Fällen ist bevorzugt ein seitlich umlaufender Rand vorgesehen, der ein seitliches Ausweichen der Druckzelle verhindert. Um eine zeitliche und räumliche Steuerbarkeit der Krafteinleitung auf das Werkstück zu ermöglichen, können auch mehrere einzeln ansteuerbare Druckzellen vorgesehen sein. Eine Druckzelle kann beispielsweise auch als gummiartiges Druckkissen ausgebildet sein oder ein solches umfassen. Vorteilhaft beim Einsatz einer Druckzelle z.B. in Form eines Druckkissens ist es, dass die in der Druckzelle auftretende Kompressionswärme zum Thermoformen genutzt werden kann, so dass der Energieaufwand der Heizeinrichtung reduziert werden kann. Auch kann in dem Druckkissen eine Heizeinrichtung vorgesehen sein, um dem Werkstück die beim Umformen benötigte Prozesswärme zuzuführen. Bevorzugt kann die bzw. eine Heizeinrichtung auch in bzw. an den Formgebungselementen, insbesondere in bzw. an den kappenförmigen Aufsatzelementen, vorgesehen werden.

Die elastisch verformbare Druckzelle kann in ihrem Inneren ein gasförmiges oder flüssiges Druckmedium aufweisen, das mit einem gegenüber dem Umgebungsdruck erhöhten Druck beaufschlagbar ist. Durch die Beaufschlagung der Druckzelle mit einem gegenüber dem Umgebungsdruck erhöhten Druck kann das Andrücken des erwärmten Werkstücks gegen das Formwerkzeug besonders präzise eingestellt (geregelt) werden. Gegebenenfalls kann der zum Andrücken erforderliche Druck beispielsweise sowohl durch die Beaufschlagung der Druckzelle mit erhöhtem Druck als auch durch das Verfahren eines Presskolbens erreicht werden, an dem die Druckzelle vorgesehen ist. Ist im Inneren der Druckzelle ein flüssiges Druckmedium vorgesehen, so ist darüber hinaus die Unfallgefahr bei einem Platzen der Druckzelle aufgrund des geringeren Dichtesprungs reduziert. Die Verwendung eines flüssigen Mediums mit hoher Wärmekapazität kann eine Optimierung der Wärmeeinbringung in das Werkstück ermöglichen, behindert aber ggf. den effektiven Einsatz von Laserstrahlung zur Wärmeeinbringung aufgrund von Absorption in der Flüssigkeit bzw. aufgrund eines gegenüber einem Gas erhöhten Brechungsindexes.

Die Heizeinrichtung kann ausgewählt sein aus der Gruppe umfassend: Wärmestrahlungseinrichtung, Wärmekonvektionseinrichtung, und Wärmekonduktionseinrichtung, d.h. alle drei Arten der Wärmeübertragung auf das Werkstück sind möglich. Als Wärmekonduktionseinrichtung kann beispielsweise eine flexible Schicht in Form einer Heizdecke oder eines Druckkissens dienen, in der mehrere Heizelemente z.B. in Form von Heizdrähten angebracht sind. Auch ist ggf. eine Zirkulation des geheizten Druckmediums im Inneren der Druckkalotte über die freiliegende Werkstückseite möglich. Als Wärmestrahlungseinrichtung kann insbesondere eine Infrarot-Strahlungsquelle, z.B. ein Diodenlaser, ggf. mit durchstimmbarer bzw. variabler IR-Wellenlänge zur Anpassung der Absorptionstiefe vorgesehen sein. Die Infrarot-Strahlungsquelle kann insbesondere mehrere individuell steuer- bzw. regelbare IR-Strahler umfassen, um beim Aufheizen der dem Formwerkzeug abgewandten Werkstückseite ein gewünschtes, orts- und zeitabhängig variierendes Temperaturprofil und damit einhergehend eine ortsabhängig variierende Viskosität des Werkstücks zu erhalten. Als Wärmestrahlungseinrichtung kann alternativ oder zusätzlich auch eine Laser-Strahlungsquelle vorgesehen sein. Beispielsweise können mit einer Ablenkeinrichtung für den Strahl (Scanner), durch entsprechendes Ausrichten des Laserstrahls auf bestimmte Zonen bzw. Bereiche des zu verformenden Werkstücks ebenfalls selektiv orts- und zeitabhängige Temperaturprofile bzw. variierende Viskositäten des Werkstücks erhalten werden.

Zur Verbesserung des Umformverhaltens können die Heizeinrichtung(en) das Werkstück gegebenenfalls lokal unterschiedlich aufheizen und z.B. in Bereichen, in denen ein vergleichsweise hoher Umformgrad erforderlich ist, den Wärmeeintrag gegenüber Bereichen mit einem vergleichsweise niedrigen Umformgrad erhöhen. Dies ist insbesondere bei einer Heizeinrichtung in Form eines Wärmestrahlers möglich, der mehrere individuell ansteuerbare Heizelemente aufweist.

Zur Verbesserung des Umformverhaltens kann insbesondere eine beidseitige Wärmezufuhr durch (mindestens) zwei Heizeinrichtungen erfolgen. Durch die beidseitige Wärmezufuhr können in dem umzuformenden Werkstück bedarfsgerecht ausgeprägte Wärmeprofile erzeugt werden, so dass sich eine bedarfsgerechte, z.B. besonders gleichmäßige, Verformung bzw. Umformung einstellt. Insbesondere steht das Werkstück nach dem Umformen nicht lokal unter Spannung, wie sie durch eine ungleichmäßige (einseitige) Erwärmung auftreten kann und die beispielsweise anschließend über Fließen abgebaut werden und so zu Geometrieabweichungen führen können. Bei der Wärmezufuhr während des Thermoformens werden typischerweise Temperaturen von ca. 100 °C oder darüber erreicht. Die jeweils verwendeten Temperaturen hängen von den eingesetzten Werkstoffen ab.

Bei einer weiteren bevorzugten Ausführungsform weist die Werkstückauflage für die trennende Bearbeitung des Werkstücks in dem Trennbereich eine Dreheinrichtung zur Drehung eines Teilbereichs der Werkstückauflage um eine Drehachse senkrecht zu einer Auflageebene auf. Durch die Dreheinrichtung kann an der typischerweise in mindestens einer Raumrichtung verfahrbaren Werkstückauflage zusätzlich eine weitere Möglichkeit (ein weiterer Freiheitsgrad) zur Handhabung des zu bearbeitenden Werkstücks geschaffen werden. Damit wird insbesondere eine Besäumung des Werkstücks in dem Trennbereich vereinfacht. Der drehbare Teilbereich der Werkstückauflage kann beispielsweise ein (kreis-)runder Abschnitt (Drehteller) des Positioniertischs sein, der mittels eines geeigneten Antriebs um die Drehachse gedreht werden kann.

Bevorzugt ist die verschließbare Öffnung an dem drehbaren Teilbereich der Werkstückauflage gebildet. Auf diese Weise kann das Werkstück sowohl beim trennenden Bearbeiten in dem Trennbereich als auch beim Thermoformen in dem Umformbereich an derselben Stelle auf der Werkstückauflage gelagert werden, so dass sich ein besonders kompakter Aufbau der Bearbeitungsmaschine ergibt. Insbesondere kann auf eine zusätzliche Handhabungseinrichtung verzichtet werden, welche die Position des Werkstücks auf der Werkstückauflage zwischen dem trennenden Bearbeiten und dem Umformen verändert. Stattdessen kann sowohl die trennende Bearbeitung als auch die Umformung des Werkstücks in einer Position erfolgen, in welcher das Werkstück bzw. der umzuformende Bereich des Werkstücks über der Öffnung positioniert ist. An dem drehbaren Teilbereich kann eine Spanneinrichtung zum Einspannen des Werkstücks angebracht sein, die beispielsweise als Greifeinrichtung z.B. mit verschwenkbaren Greifarmen ausgebildet ist, um das Werkstück auch während einer Drehbewegung zu fixieren. Insbesondere können die Greifarme oder andere geeignete Greifeinrichtungen zum Fixieren des Werkstücks durch die Öffnung hindurch bewegt werden.

Bevorzugt umfasst die Bearbeitungsmaschine ferner eine Einrichtung zum Verstärken des thermogeformten Werkstücks durch Anbringen mindestens eines Strukturelements an dem Werkstück. Das Anbringen von Strukturelementen an bzw. auf das thermogeformte Werkstück erlaubt es, das Werkstück strukturell zu verstärken, was insbesondere bei dünnen thermoplastisch verformten Werkstücken vorteilhaft ist. In vorteilhafter Weise kann das Werkstück durch die Strukturelemente auch funktionalisiert werden, d.h. das Werkstück wird mit Funktionselementen, wie zum Beispiel Lagern, Anschlüssen oder dergleichen, für dessen spätere Verwendung versehen.

Das Funktionalisieren bzw. Verstärken des Werkstücks kann beispielsweise durch das (ein- oder beidseitige) Anspritzen von spritzgussfähigem Material an das Werkstück erfolgen (so genanntes Hinterspritzen). Hierzu wird das Werkstück in die Kavität eines Spritzgießwerkzeugs eingebracht und nachfolgend in die Kavität ein flüssiger und aushärtbarer Kunststoff (beispielsweise eine duroplastische Matrix) eingespritzt. Nach dem Aushärten ist der Kunststoff mit dem Werkstück dauerhaft verbunden.

Bei einer bevorzugten Weiterbildung umfasst die Einrichtung eine adaptive Formhälfte zum einseitigen Gegenhalten während des Anbringens des mindestens einen Strukturelements an dem thermogeformten Werkstück. Beim Anbringen von Strukturelementen beispielsweise mittels Spritzgießens oder Druckgießens, bei dem das angespritzte Material mit vergleichsweise hohen Drücken auf das Werkstück aufgebracht wird, ist es von Vorteil, wenn das Werkstück gleichmäßig über seine Fläche auf der adaptiven Formhälfte aufliegt, sodass beim Hinterspritzen auf das Werkstück einwirkende Kräfte gleichmäßig und ohne Beschädigung des Werkstücks abgeleitet werden können. Die adaptive Formhälfte wirkt als Rück- oder Gegenhalter und ersetzt die ansonsten typischer Weise erforderliche zweite Formhälfte der Kavität.

Alternativ oder zusätzlich kann das Funktionalisieren des Werkstücks auch durch Anschweißen, Sintern oder Ankleben von Strukturelementen bzw. Verstärkungselementen, wie beispielsweise Verstärkungsrippen, Verstärkungsstreben oder Verstärkungsscheiben, erfolgen. Derartige Strukturelemente sind in der Regel in einem vorhergehenden Arbeitsschritt herzustellen und an die dreidimensionale Form des thermogeformten Werkstücks anzupassen.

Eine weitere alternative oder zusätzliche Art des Anbringens von Strukturelementen an das Werkstück stellen generative Fertigungsverfahren (Materialaufbauverfahren), wie beispielsweise das selektive Laserschmelzen (engl. Selective Laser Melting, SLM), das selektive Lasersintern (engl. Selective Laser Sintering, SLS) oder auch die Stereolithografie (abgekürzt STL oder SLA) dar. Beim selektiven Laserschmelzen (SLM) werden typischerweise metallische Pulver mit einem Laser vollständig aufgeschmolzen, sodass nach der Erstarrung eine feste (erste) Materialschicht entsteht. Anschließend wird eine weitere Pulverschicht auf das bereits erstarrte Material aufgebracht und das Auf- bzw. Umschmelzen lokal wiederholt, sodass die gewünschte Geometrie (beispielsweise die Geometrie einer spezifischen Verstärkungsrippe) generiert wird. Bei klassischen Varianten des selektiven Lasersinterns (SLS) werden Pulverkörner teilweise aufgeschmolzen, d.h. es erfolgt ein Flüssigphasensinterprozess. Bei diesem generativen Verfahren können sowohl Kunststoffe als auch Metalle (mit speziellen Pulvern) gesintert werden. Bei der Stereolithografie (SLA) wird hingegen typischerweise ein lichtaushärtender Kunststoff von einer Strahlungsquelle (z.B. einem Laser, insbesondere einem UV-Laser) in dünnen Schichten gehärtet.

Die Adaptivität der Formhälfte kann durch ein zumindest einseitig elastisch verformbares Behältnis erzeugt werden, das zumindest teilweise mit einer bevorzugt bei Normaldruck rieselfähigen Substanz (beispielsweise ein Schüttgut aus einem Sand, Granulat, kleinen Kugeln oder dergleichen, dessen Elemente insbesondere beim Anlegen eines Unterdrucks durch Form- und/oder Kraftschluss verschränkbar sind, so dass die Substanz eine bei Normaldruck angenommene Geometrie beibehält) gefüllt und mit einer Absaugeinrichtung (beispielsweise einer Vakuumpumpe) verbunden ist. Ein dreidimensional verformtes Werkstück kann unter Aufbringung eines bestimmten Mindestdrucks auf die elastisch verformbare Seite des Behältnisses aufgelegt bzw. aufgedrückt werden, sodass die dreidimensionale Form der einen Seite des Werkstücks von der elastischen Seite des Behältnisses und der darin befindlichen Substanz angenommen wird (Einprägen der Werkstückoberflächenform). Anschließend kann die angenommene dreidimensionale Form durch Abpumpen von in dem Behältnis bzw. der Substanz enthaltenem Gas verfestigt (gewissermaßen konserviert) werden. Das evakuierte Behältnis kann dann gegebenenfalls von der Absaugeinrichtung getrennt werden, wobei das Vakuum bzw. der Unterdruck in dem Behältnis durch geeignete Verschlussmittel erhalten bleibt. Das evakuierte Behältnis (beispielsweise ein Vakuumsack) lagert das aufliegende dreidimensionale Werkstück gleichmäßig bzw. flächig und sorgt für die vorbeschriebene Ableitung von beim Hinterspritzen auftretenden Kräften. Eine solche Lagerung ist nicht nur beim Hinterspritzen des Werkstücks von Vorteil, sondern sorgt generell (auch bei generierenden Fertigungsverfahren, wie SLS, SLM oder SLA) oder beim Anschweißen von vorgefertigten Strukturen für eine stabilisierende Lagerung des sonst nur schwer handhabbaren dreidimensionalen Werkstücks.

Mit Hilfe einer Umformeinrichtung wie oben beschrieben kann ein Verfahren zum Thermoformen eines thermoplastisch verformbaren, bevorzugt plattenartigen Werkstücks, insbesondere aus faserverstärktem Kunststoff, durchgeführt werden, bei dem das Umformen des Werkstücks mittels der Umformeinrichtung erfolgt. Das Verfahren zum Thermoformen profitiert von denselben Vorteilen wie die weiter oben beschriebene Umformeinrichtung, so dass auf die Darstellung dieser Vorteile an dieser Stelle verzichtet wird.

Bei einer Variante des Verfahrens werden zum Entformen des in die Zielform umgeformten Werkstücks Aufsatzelemente des Formwerkzeugs mit Hinterschneidungen von den Formgebungselementen gelöst. Aufsatzelemente mit Hinterschneidungen weisen quer zur Entformungsrichtung des Werkstücks hervorstehende Abschnitte auf, die bei der Entformung ein Hindernis darstellen. Durch das (automatisierte) Lösen von Aufsatzelementen mit Hinterschnitt kann das Werkstück gemeinsam mit dem entsprechenden Aufsatzelement von dem Formwerkzeug bzw. von Formgebungselementen mit Aufsatzelementen getrennt werden, die keine Hinterschneidungen aufweisen. Dies stellt eine besonders einfache Art und Weise der Entformung von Werkstücken mit Hinterschneidungen dar. Ist das Werkstück mit dem bzw. den die Hinterschneidungen aufweisenden Aufsatzelement(en) von dem Formwerkzeug getrennt, können das bzw. die an dem Werkstück verbliebenen Aufsatzelement(e) in der Regel manuell von dem umgeformten Werkstück gelöst werden.

Bei einer weiteren Variante des Verfahrens wird zum Entformen des in die Zielform umgeformten Werkstücks zunächst mindestens ein Aufsatzelement ohne Hinterschneidungen zur Bildung eines Freiraums aus seiner Zielposition in eine Entformungsposition bewegt und anschließend das Werkstück unter Nutzung des gebildeten Freiraums von den Aufsatzelementen mit Hinterschneidungen gelöst. Bei dieser vorteilhaften Variante können alle Aufsatzelemente am Formwerkzeug verbleiben und dennoch können Werkstücke mit Hinterschneidungen entformt werden.

Das Befreien des Werkstücks von Aufsatzelementen mit Hinterschneidungen kann auch automatisiert durch eine Drehung und/oder Verkippung der Aufsatzelemente erfolgen, ohne dass diese hierzu von den Formgebungselementen gelöst werden müssen. Um das Befreien des Werkstücks von den Aufsatzelementen mit Hinterschneidungen zu vereinfachen, können diese über eine flexible Anbindung z.B. in der Art einer Feder mit den jeweiligen Formgebungselementen (ggf. lösbar) verbunden sein. Die Anbindung der kappenförmigen Aufsatzelemente kann insbesondere in der Art eines Federzugs realisiert sein, so dass durch den zunehmenden Zug beim Entformen auch kappenförmige Aufsatzelemente mit Hinterschneidungen vom Werkstück gelöst werden können, da diese vom Formgebungselement abgehoben werden und eine Dreh- oder Kippbewegung ausführen können. Nach dem Entformen werden die Aufsatzelemente durch die Federkraft zu den Formgebungselementen zurückgezogen und können mit Hilfe von Zentrierungselementen (z.B. Nasen etc.) zentriert werden, so dass eine vorgegebene, eindeutige Ausrichtung der Aufsatzelemente relativ zu den Formgebungselementen sichergestellt ist. Beim Verbringen der Formgebungselemente in die Zielposition erfolgt bei einer solchen flexiblen Anbindung eine Zentrierung eines jeweiligen Aufsatzelements durch das diesem zugeordnete Formgebungselement sowie ggf. durch die umgebenden Formgebungselemente bzw. deren Aufsatzelemente, so dass die gewünschte Zielform erreicht werden kann.

Bei einer weiteren Variante des Verfahrens wird in dem Trennbereich in einem dem Umformen vorhergehenden Verfahrensschritt das umzuformende Werkstück derart zugeschnitten, dass die durch den Zuschnitt erzeugte Werkstückkontur im Wesentlichen einer ebenen Abwicklung der Zielform entspricht und/oder in einem dem Umformen nachfolgenden Verfahrensschritt das umgeformte Werkstück in dem Trennbereich besäumt wird. Auf diese Weise kann ausgehend von einem Rohmaterial (typischerweise einem faserverstärkten plattenartigen Halbzeug aus Thermoplast) in nur wenigen Verfahrensschritten ein komplex geformtes und mit einem hochwertigen Abschluss (Rand) versehenes Endprodukt hergestellt werden.

Beim Zuschneiden des Werkstücks wird in das typischerweise plattenförmige Werkstück entlang einer vorgegebenen Schnittkontur beispielsweise mittels einer Laserschneideinrichtung eine Schnitt- bzw. Trennfuge eingebracht, so dass ein zugeschnittenes Werkstück und ein Restgitter entsteht. Die einzuhaltende Schnittkontur ergibt sich aus der Abwicklung der dreidimensionalen Zielgeometrie, wobei Toleranzen zu berücksichtigen sind, die einen sicheren Umformprozess ermöglichen und durch die der Werkstoffverlust reduziert werden kann. Auch können ggf. Entlastungsschnitte in das Werkstück eingebracht werden, um beim Umformprozess auftretende Spannungen oder eine gegebenenfalls auftretende Faltenbildung zu reduzieren.

Beim Besäumen wird insbesondere die Kontur des umgeformten und entformten Werkstücks nachbearbeitet. Zur Besäumung kann das umgeformte Werkstück auf der Werkstückauflage gelagert (festgelegt oder einfach nur abgelegt) und zurück in den Trennbereich verfahren werden. Die Trenneinrichtung, insbesondere die Laserschneideinrichtung, bearbeitet die Ränder des Werkstücks nach, so dass ein Rand mit einer gewünschten Kontur entsteht. Zur Nachbearbeitung des Werkstücks kann an der Laserschneideinrichtung eine Strahlumlenkeinrichtung zur Umlenkung des Laserstrahls vorgesehen sein. Eine weitere Umlenkeinrichtung kann vorgesehen sein, um den Laserstrahl, nachdem dieser das Werkstück durchlaufen hat, zu einer Strahlfalle umzulenken.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Bearbeitungsmaschine mit einem Trennbereich, einem Umformbereich und einem weiteren Bearbeitungsbereich,
- Fig. 2: eine schematische Darstellung mehrerer Schritte eines Verfahrens zum trennenden Bearbeiten und Thermoformen eines thermoplastisch verformbaren Werkstückes,
- Fig. 3: eine schematische Darstellung eines Verfahrensschritts gemäß Fig. 2, bei dem das Werkstück mittels einer Laserschneideinrichtung an dem Trennbereich zugeschnitten wird,
- Fig. 4: eine schematische Darstellung eines weiteren Verfahrensschritts gemäß Fig. 2, bei dem das zugeschnittene Werkstück mittels einer Heizeinrichtung erwärmt wird,
- Fign. 5a,5b: schematische Darstellungen eines Verfahrensschritts gemäß Fig. 2, bei dem eine flexible Schicht auf Formgebungselemente eines Formwerkzeugs aufgelegt wird,
- Fig. 6a,b: schematische Darstellungen eines Verfahrensschritts gemäß Fig. 2, bei dem ein Formwerkzeug und eine Druckerzeugungseinheit in einer Umformposition zum Abformen des Werkstücks zusammenwirken,
- Fig. 7a: eine schematische Darstellung eines Verfahrensschritts gemäß Fig. 2, bei dem das umgeformte Werkstück von einem Aufsatzelement mit Hinterschneidungen entformt wird,
- Fig. 7b: eine Detailansicht des Aufsatzelements mit Hinterschneidungen gemäß Fig. 7a,
- Fig. 8a,b: schematische Darstellungen einer Dreheinrichtung zur Drehung eines Teilbereichs einer Werkstückauflage der Bearbeitungsmaschine von Fig. 1 mit einer verschließbaren Öffnung und einer Greifeinrichtung,
- Fig. 9: eine schematische Darstellung eines Verfahrensschritts gemäß Fig. 2, bei dem das umgeformte Werkstück mittels der Laserschneideinrichtung besäumt wird; und
- Fig. 10: eine schematische Darstellung des gemäß dem Verfahren gemäß Fig. 2 hergestellten dreidimensionalen Werkstücks vor der Entnahme.

In der folgenden Beschreibung der Zeichnungen werden für gleiche bzw. funktionsgleiche Bauteile identische Bezugszeichen verwendet.

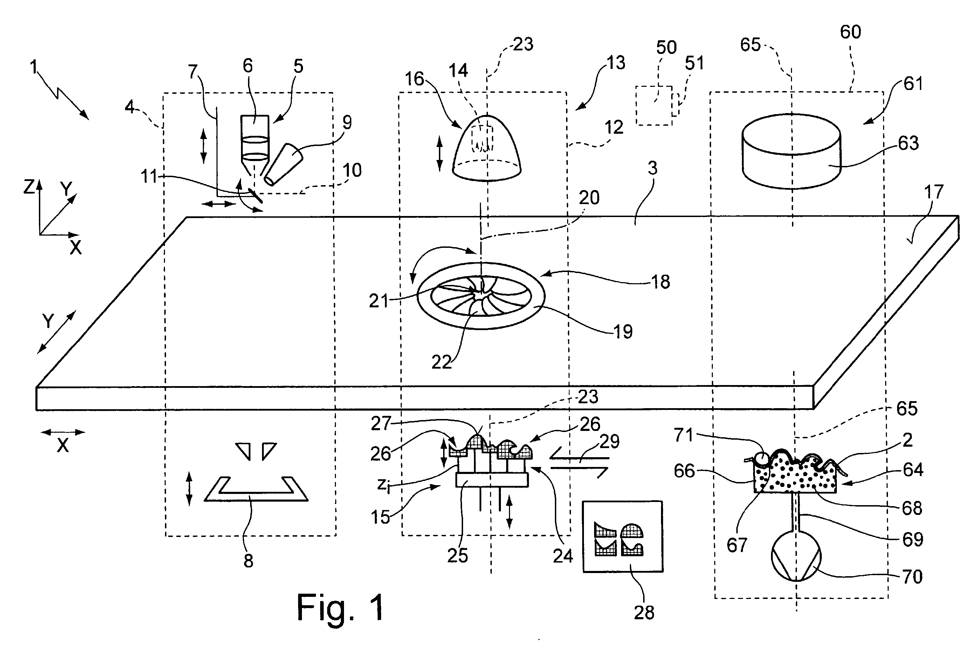

Fig. 1 zeigt eine Bearbeitungsmaschine 1 zum trennenden sowie zum umformenden Bearbeiten von thermoplastisch verformbaren (in Fig. 1 nicht dargestellten) Werkstücken. Zur Bearbeitung können die Werkstücke über eine in Fig. 1 ebenfalls nicht dargestellte Zuführeinrichtung beispielsweise durch Abwickeln von einer Rolle oder Entnahme von einem Werkstück-Stapel einer als Positioniertisch 3 ausgebildeten ebenen Werkstückauflage zugeführt und dort abgelegt werden. Nach der Bearbeitung können die fertiggestellten Werkstücke über eine in Fig. 1 ebenfalls nicht dargestellte Entnahmeeinrichtung von der Bearbeitungsmaschine 1 entfernt werden. Bei Raumtemperatur sind die thermoplastisch verformbaren Werkstücke fest, so dass sich die Handhabung beim Transport an der Zuführung bzw. Entnahme von herkömmlichen Blechen orientieren kann.

Die Bearbeitungsmaschine 1 weist einen in Fig. 1 gestrichelt dargestellten, ortsfesten Trennbereich 4 auf, an dem eine Trenneinrichtung in Form einer Laserschneideinrichtung 5 zum trennenden Bearbeiten des Werkstücks vorgesehen ist. Die Laserschneideinrichtung 5 umfasst eine Strahlführungseinrichtung 6 (Bearbeitungskopf), eine Strahlumlenkeinrichtung 7, eine unter dem Positioniertisch 3 angeordnete Strahlfalle 8 sowie eine Absaugungseinrichtung 9. Die Laserschneideinrichtung 5 weist auch eine in Fig. 1 nicht bildlich dargestellte Strahlerzeugungseinrichtung in Form eines Lasers, beispielsweise eines CO₂-Lasers oder eines Festkörperlasers, auf und ist dazu eingerichtet, thermoplastisch verformbare, insbesondere faserverstärkte Werkstücke 2 trennend zu bearbeiten bzw. zu schneiden, ohne dass es zu Abbränden des Werkstückmaterials kommt.

Die Strahlumlenkeinrichtung 7 dient der Umlenkung des aus der Strahlführungseinrichtung 6 senkrecht zur Arbeitsebene (XY-Ebene eines XYZ-Koordinatensystems) austretenden Laserstrahls 10 und wird insbesondere benötigt, um das dreidimensional umgeformte Werkstück von mehreren Seiten trennend zu bearbeiten. Zu diesem Zweck weist die Strahlumlenkeinrichtung 7 einen Umlenkspiegel 11 auf, der sowohl in der Z-Richtung senkrecht zur Arbeitsebene an unterschiedlichen Positionen zustellbar ist als auch um mindestens eine Achse (im vorliegenden Beispiel parallel zur Y-Richtung) verkippt werden kann, um in der Art eines Scannerspiegels den Laserstrahl 10 auf unterschiedliche Stellen an dem Werkstück zu richten. Auch eine Verschiebung des Umlenkspiegels 11 in der X- bzw. Y-Richtung ist mittels herkömmlicher (nicht gezeigter) Antriebe möglich. Für die trennende Bearbeitung des Werkstücks kann auch der Positioniertisch 3 mit Hilfe von in Fig. 1 durch Doppelpfeile angedeuteten Linearantrieben in der XY-Ebene verschoben werden.

Die bei der Bearbeitung entstehenden Emissionen, wie beispielsweise Dämpfe, können mittels einer Düse der Absaugeinrichtung 9 aus dem Trennbereich 4 entfernt werden. Um eine gute Absaugung zu ermöglichen, kann die Absaugeinrichtung 9 eine schlitzförmige Düse mit einer breiten Düsenöffnung aufweisen und/oder die Düse kann mit dem Umlenkspiegel 11 bewegungsgekoppelt sein bzw. mit dem Umlenkspiegel 11 mitgeführt werden. Eine entsprechende Absaugung kann auch unterhalb des Positioniertisches 3 vorgesehen sein. Die Strahlfalle 8 dient dem Auffangen des Laserstrahls 10, nachdem der Laserstrahl 10 das Werkstück 2 beim schneidenden Bearbeiten durchdrungen hat. Eine (nicht gezeigte) weitere Düse der Absaugeinrichtung 9 ist unterhalb des Werkstücks 2 angeordnet und an dem Drehteller 19 bzw. der Greifeinrichtung 34 befestigt. Die weitere Düse ist über eine flexible, gasdichte Verbindung mit einem ebenfalls nicht bildlich dargestellten stationären Teil der Absaugeinrichtung 9 unterhalb des Positioniertisches 3 verbunden.

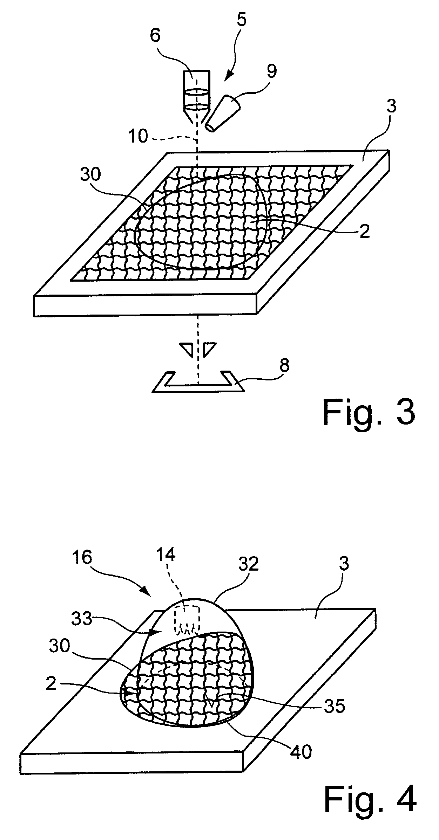

Zum thermischen Umformen des Werkstücks weist die Bearbeitungsmaschine 1 ferner einen ortsfesten Umformbereich 12 auf, an dem eine Umformeinrichtung 13 angebracht ist. Die Umformeinrichtung 13 dient zur Umformung des Werkstücks ausgehend von einer typischerweise ebenen bzw. plattenartigen Gestalt in eine dreidimensionale Zielform bzw. Zielgeometrie. Die Umformeinrichtung 13 umfasst eine Heizeinrichtung 14 zum Erwärmen des Werkstücks 2, ein Formwerkzeug 15 zum Abformen des erwärmten Werkstücks 2, sowie eine Druckerzeugungseinrichtung 16 zum Andrücken des erwärmten Werkstücks gegen das Formwerkzeug 15 beim Abformen (vgl. auch Fig. 4). Um an dem in Fig. 4 dargestellten Werkstück 2 die gewünschte Zielform zu erzeugen, wirkt die Druckerzeugungseinrichtung 16 auf das erwärmte Werkstück 2 ein, um dieses gegen das Formwerkzeug 15 abzuformen.

Die als Positioniertisch 3 ausgebildete Werkstückauflage weist eine Auflagefläche 17 auf, auf welcher zu bearbeitende Werkstücke 2 aufgelegt werden können und auf der diese ggf. mit Hilfe von geeigneten Befestigungsmitteln, z.B. seitlich vorgesehenen und bspw. mittels Federn nachführbaren Klemmen fixiert werden können. Wie oben dargestellt ist der Positioniertisch 3 in X-Richtung und in Y-Richtung verfahrbar, so dass ein zu bearbeitendes Werkstück 2 zwischen dem Trennbereich 4 und dem Umformbereich 12 verfahren werden kann.

Schließlich kann das Werkstück 2 nach einer erfolgten umformenden Bearbeitung im Umformbereich 12 durch den verfahrbaren Positioniertisch 3 zurück in den Trennbereich 4 bewegt werden, um eine weitere trennende Bearbeitung (oder z.B. Nachbearbeitung) an dem umgeformten Werkstück 2 durchzuführen.

Der Positioniertisch 3 weist eine Dreheinrichtung 18 zur Drehung eines Teilbereichs des Positioniertisches 3 um eine Drehachse 20 auf, die in Z-Richtung, d.h. senkrecht zur Auflagefläche 17 verläuft. Dadurch sind Werkstücke 2, die in dem im vorliegenden Beispiel als Drehteller 19 ausgebildeten Teilbereich gelagert sind (d.h. auf dem Drehteller 19 aufliegen), um die Drehachse 20 drehbar (die Drehachse 20 verläuft in der Regel parallel zur Z-Richtung). Die Drehbarkeit ermöglicht eine einfache Positionierung des zu bearbeitenden Werkstücks 2 relativ zur Trenneinrichtung 5 bzw. zur Umformeinrichtung 13. Insbesondere zur trennenden Bearbeitung des umgeformten Werkstücks 2 ist die Möglichkeit der Drehung des Werkstücks 2 (zusätzlich zur Verschiebbarkeit des Positioniertisches 3) vorteilhaft.

Um ein Zusammenwirken der Druckerzeugungseinrichtung 16, die in Fig. 1 oberhalb des Positioniertisches 3 angeordnet ist, mit dem Formwerkzeug 15 zu ermöglichen, das in Fig. 1 unterhalb des Positioniertisches 3 angeordnet ist, weist der Positioniertisch 3, genauer gesagt die den Drehteller 19 aufweisende Dreheinrichtung 18 eine verschließbare Öffnung 21 auf. Die verschließbare Öffnung 21 kann beispielsweise durch eine blendenartige Verschlussmechanik 22 innerhalb des Drehtellers 19 ausgebildet sein. Im geöffneten Zustand der Öffnung 21 und bei entsprechender Positionierung des Positioniertisches 3 und damit des Drehtellers 19 können das Formwerkzeug 15, genauer gesagt ein Grundkörper 25 des Formwerkzeugs 15, und die Druckerzeugungseinrichtung 16 zum Thermoformen des Werkstücks 2 entlang einer Hubachse 23 parallel zur Z-Richtung in eine Umformposition zum Abformen des Werkstücks 2 verfahren werden. Die Hubachse 23 kann anders als in Fig. 1 gezeigt insbesondere mit der Drehachse 20 der Dreheinrichtung 18 zusammenfallen.

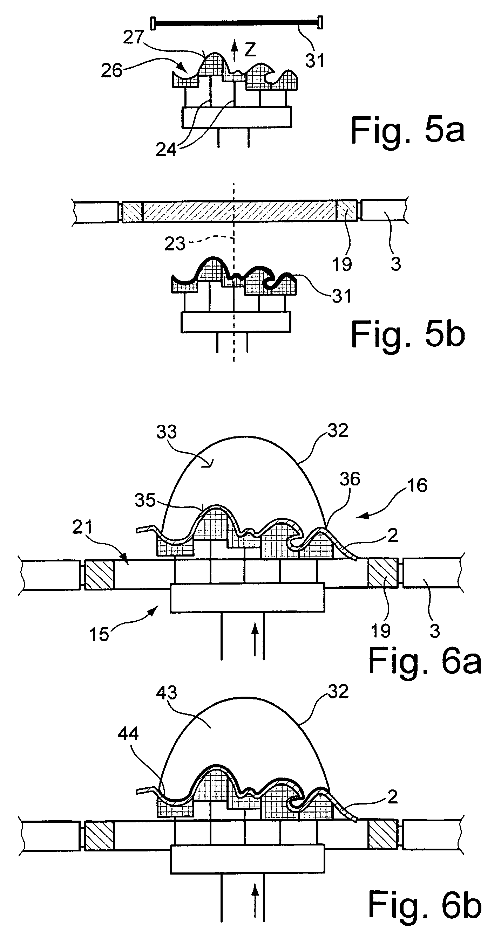

Das Formwerkzeug 15 und/oder die Druckerzeugungseinrichtung 16 werden hierbei zumindest teilweise durch die Öffnung 21 in dem Drehteller 19 verschoben. In der Umformposition liegt das umzuformende Werkstück 2 auf dem Formwerkzeug 15 auf, um dieses abzuformen (vgl. auch Fig. 6). Beim Abformen (bzw. Umformen) wird das erwärmte Werkstück 2 durch die Druckerzeugungseinrichtung 16 gegen die an dem Formwerkzeug 15 gebildete dreidimensionale Zielform angedrückt. Die Druckerzeugungseinrichtung 16 presst hierbei das mittels der Heizeinrichtung 14 erwärmte Werkstück 2 unter Druck gegen das Formwerkzeug 15 und formt dieses in die durch das Formwerkzeug 15 vorgegebene Zielform um.

Um mittels der Umformeinrichtung 13 unterschiedliche dreidimensionale Zielgeometrien erzeugen zu können, umfasst das Formwerkzeug 15 eine Mehrzahl von Formgebungselementen 24, die als Zustell-, Trägerelemente bzw. als Aktuatoren dienen und die individuell, d.h. unabhängig voneinander in Z-Richtung bewegbar sind. Die Formgebungselemente 24 können in Z-Richtung in eine jeweilige in Fig. 1 dargestellte Zielposition zᵢ bewegt werden. Hierzu können in der Z-Richtung verfahrbare (nicht gezeigte), insbesondere elektrisch, pneumatisch, magnetisch und/oder hydraulisch angetriebene Aktuatoren, z.B. in Form von Kolben, vorgesehen sein. Die Formgebungselemente 24 können in ihren jeweiligen Zielpositionen zᵢ zugestellt werden, d.h. in einem vorgegebenen Abstand zu einem Grundkörper 25 des Formwerkzeugs 15 fixiert werden. Der Grundkörper 25 selbst kann ebenfalls durch einen Aktuator entlang der Hubachse 23 verschoben werden. Die Zustellung der Formgebungselemente 24 in ihren jeweiligen Zielpositionen zᵢ kann zeitlich synchron oder nacheinander bzw. sukzessive erfolgen.

Die Formgebungselemente 24 weisen austauschbare, kappenförmige Aufsatzelemente 26 mit daran gebildeten Abformungsflächen 27 auf, wobei die Abformungsflächen 27 der Aufsatzelemente 26 gemeinsam die Zielform des Werkstücks 2 bilden, wenn die Formgebungselemente 24 in ihren jeweiligen Zielpositionen zᵢ zugestellt sind. Im Idealfall bilden beim Erreichen der Zielform die Abformungsflächen 27 der einzelnen Formgebungselemente 24 eine kontinuierliche Oberfläche, welche die gewünschte Zielgeometrie des Werkstücks 2 annähert, die einer Freiform-Fläche entspricht. Bevorzugt verläuft der Übergang zwischen benachbarten Abformungsflächen 27 in Z-Richtung kontinuierlich, d.h. ohne Stufen. Die Gesamtheit der Abformungsflächen 27 bildet eine der Zielgeometrie des Werkstücks 2 entsprechende bzw. diese Zielgeometrie annähernde Freiform-Fläche aus. Wie weiter unten dargestellt wird, können zur Annäherung der Zielgeometrie Aufsatzelemente 26 mit unterschiedlich ausgebildeten Abformungsflächen 27 verwendet werden. Es ist aber auch möglich, zur Approximation der Zielgeometrie gleichartige kappenförmige Aufsatzelemente 26 zu verwenden, beispielsweise in Form von gleichartigen (Rund-)kappen, auf denen einen Diaphragma aufgebracht wurde, wodurch ebenfalls die Zielgeometrie approximiert werden kann.

Die Abformungsflächen 27 der jeweiligen Formgebungselemente 24 weisen in der Projektion in die XY-Ebene typischer Weise eine identische, in der Regel dreieckige oder viereckige, insbesondere gleichseitig dreieckige, rechtwinklig dreieckige, quadratische, rautenförmige oder rechteckige Grundfläche auf, wobei die einzelnen Formgebungselemente 24 typischer Weise in einem regelmäßigen Raster (matrixförmig) angeordnet sind, so dass diese in der Projektion eine durchgängige Fläche bilden.

Mit Hilfe der austauschbaren Formgebungselemente 24 kann die dreidimensionale Zielform verändert werden, ohne dass ein Austausch des gesamten Formwerkzeugs 15 erforderlich ist, um faserverstärkte Thermoplaste (Organobleche) und andere Werkstücke zu bearbeiten. Zur Anpassung eines jeweiligen Formgebungselements 24 an die jeweilige (lokale) Zielform weist die Umformeinrichtung 13 ein Magazin 28 zur Bevorratung von Aufsatzelementen 26 sowie eine Wechseleinrichtung 29 zum Austausch der Aufsatzelemente 26 auf. Das Magazin 28 ist typischerweise mit Aufsatzelementen 26 bestückt, welche die Ausbildung der momentan zu erzeugenden Zielgeometrie sowie die Ausbildung der Zielgeometrien von in nachfolgenden Schritten umzuformenden Werkstücken ermöglichen. Das Magazin 28 kann zu diesem Zweck automatisiert oder manuell mit Aufsatzelementen 26 bestückt werden.

Zum automatisierten Austausch der Aufsatzelemente 26 können diese mit Hilfe der Wechseleinrichtung 29 an den Formgebungselementen 24 befestigt und von diesen gelöst werden. Die Befestigung der Aufsatzelemente 26 an den Formgebungselementen 24 kann durch eine formschlüssige und/oder kraftschlüssige Verbindung, beispielsweise durch eine Schraubverbindung oder eine Rastverbindung, erfolgen. Die Aufsatzelemente 26 können ggf. in unterschiedlichen Winkelstellungen bezüglich einer in Z-Richtung verlaufenden Drehachse zustellbar bzw. in unterschiedlichen Winkelstellungen an den Formgebungselementen 24 befestigbar sein, um diese geeignet zu orientieren. Bei Formgebungselementen 24 mit quadratischer Grundfläche kann beispielsweise eine Befestigung der Aufsatzelemente 26 in vier unterschiedlichen Winkelstellungen bzw. Orientierungen (0°, 90°, 180°, 270°) um eine in Z-Richtung verlaufende zentrale Achse des Formgebungselements 24 erfolgen.

Für den Fall, dass die Herstellung einer gewünschten dreidimensionalen Zielform mit den der Bearbeitungsmaschine 1 zur Verfügung stehenden Aufsatzelementen 26 nicht möglich ist bzw. eine Annäherung der Zielform innerhalb gewünschter Toleranzen nicht erreichbar ist, kann eine in Fig. 1 gezeigte Steuerungseinrichtung 50 dies erkennen und einen oder mehrere Datensätze erzeugen, in dem bzw. in denen die dreidimensionale Geometrie einer oder mehrerer zur Erzeugung der Zielgeometrie benötigten Abformungsflächen 27 enthalten ist. Der Datensatz kann über eine Datenschnittstelle 51 an eine externe Stelle, z.B. an einen Werkzeughersteller, weitergegeben werden, welcher ein Aufsatzelement 26 mit der gewünschten Geometrie der Abformungsfläche 27 nachfertigt. Das entsprechende Aufsatzelement 26 wird dann an einen Bediener der Bearbeitungsmaschine 1 übermittelt, um das Aufsatzelement 26 in das Magazin 28 zu verbringen. Die Herstellung des Werkstücks mit der gewünschten Zielgeometrie wird hierbei zurückgestellt, bis alle benötigten Aufsatzelemente 26 verfügbar sind.

Es ist ferner möglich, das Werkstück 2 nach dem formenden Bearbeiten im Umformbereich 12 und/oder nach dem trennenden Bearbeiten im Trennbereich 4 durch Verfahren des Positioniertisches 3 in einen weiteren Bearbeitungsbereich 60 zu befördern. In dem weiteren Bearbeitungsbereich 60 kann das umgeformte und/oder trennend bearbeitete Werkstück 2 durch Anbringen von Strukturelementen 71 strukturell verstärkt und/oder funktionalisiert werden. Im Anschluss an die Bearbeitung des Werkstücks 2 in dem weiteren Bearbeitungsbereich 60 kann das Werkstück 2 durch den verfahrbaren Positioniertisch 3 beispielsweise wieder zurück in den Trennbereich 4 bewegt werden, um eine weitere trennende Bearbeitung (oder z.B. Nachbearbeitung) an dem umgeformten Werkstück 2 durchzuführen.

In dem ortsfesten weiteren Bearbeitungsbereich 60 weist die Bearbeitungsmaschine 1 eine Einrichtung 61 auf, mittels derer das thermo(um)geformte Werkstück 2 durch das Anbringen von zusätzlichem Material auf einer Seite des Werkstücks 2 verstärkt und/oder funktionalisiert werden kann, wobei typischer Weise ein Verbundwerkstück gebildet wird. Beispielsweise kann mindestens eine Seite des Werkstücks 2 mit einem Strukturelement 71 versehen werden, welches der Befestigung des Werkstücks 2 an einem weiteren Bauteil dient. Hierfür können Funktionselemente wie beispielsweise Lager, Aufnahmen, etc., an einer Seite des Werkstücks 2 anzubringen sein.

Die Einrichtung 61 in Fig. 1 ist zum (einseitigen) Anspritzen von Material an das Werkstück 2 eingerichtet. Die Einrichtung 61 umfasst hierfür neben einer ersten Formhälfte 63, in die das anzuspritzende Material eingespritzt wird, eine zweite Formhälfte 64 als Gegenhalter, an der das Werkstück 2 mit seiner nicht zu hinterspritzenden Seite vollflächig anliegt. Die zwischen der zu hinterspritzenden Seite des Werkstücks 2 und der ersten Formhälfte 63 gebildete Kavität (Hohlraum) wird durch das Einspritzen des Materials (typischerweise ein flüssiger und aushärtbarer Kunststoff,) hinterspritzt und bildet nach dem Erstarren des Materials eine strukturelle Verstärkung bzw. ein Strukturelement 71 an dem Werkstück 2.

Um ein Zusammenwirken der ersten Formhälfte 63, die in Fig. 1 oberhalb des Positioniertisches 3 angeordnet ist, mit der zweiten Formhälfte 64 zu ermöglichen, die in Fig. 1 beispielhaft unterhalb des Positioniertisches 3 angeordnet ist, kann von der verschließbaren Öffnung 21 in einer der Nutzung der Heizeinrichtung 14 und des Formwerkzeugs 15 entsprechenden Weise Gebrauch gemacht werden. Das heißt, im geöffneten Zustand der Öffnung 21 und bei entsprechender Positionierung des Positioniertisches 3 und damit des Drehtellers 19 können die erste und zweite Formhälfte 63,64 der Einrichtung 61 zum Bilden von Strukturelementen 71 an dem Werkstück 2 entlang einer Hubachse 65 parallel zur Z-Richtung in eine zum Hinterspritzen geeignete Position verfahren werden. Die erste und/oder die zweite Formhälfte 63, 64 werden hierbei zumindest teilweise durch die Öffnung 21 in dem Drehteller 19 verschoben. In der zum Hinterspritzen geeigneten Position liegt das zu verstärkende Werkstück 2 auf der zweiten Formhälfte 64 vollflächig auf, um den Spritzgussvorgang zu ermöglichen. Die beiden Formhälften 63,64 können hierbei randseitig dichtend aneinander aufliegen (nicht dargestellt).

Die zweite Formhälfte 64 ist im vorliegenden Beispiel als eine adaptive Formhälfte 64 ausgebildet. Durch die Adaptivität der zweiten Formhälfte 64 passt sich deren Oberfläche gleichmäßig an die Oberfläche des dreidimensional geformten Werkstücks 2 an und die beim Anspritzen des Kunststoff-Materials auf das Werkstück 2 einwirkenden Druck-Kräfte werden gleichmäßig aufgenommen, sodass eine Beschädigung des Werkstücks 2 beim Hinterspritzen vermieden werden kann.

Die adaptive zweite Formhälfte 64 ist durch ein Behältnis 66 mit einer verformbaren Seite 67 bzw. Oberfläche gebildet, das zumindest teilweise mit einer typischer Weise rieselfähigen Substanz 68 gefüllt ist. Das Behältnis 66 ist ferner über eine für die rieselfähige Substanz nicht durchlässige Leitung 69 mit einer Vakuumpumpe 70 verbunden. Zur Erzeugung einer an die Form des Werkstücks 2 angepassten Seite 67 der zweiten Formhälfte 64 wird das Werkstück 2 unter Druck auf die verformbare Seite 67 des Behältnisses 66 aufgelegt bzw. auf die verformbare Seite 67 aufgedrückt, sodass die dreidimensionale Form der Vorderseite des Werkstücks 2 von der Seite 67 des Behältnisses 66 und der darin befindlichen Substanz 68 angenommen wird. Anschließendes Abpumpen bzw. Evakuieren des zuvor im Behältnis 66 befindlichen Gases (typischer Weise Luft) verfestigt die angenommene Form der zweiten Formhälfte 64 mittels Form- und/oder Kraftschluss zwischen den rieselfähigen Elementen der Substanz 68. Durch das Verfestigen bzw. Konservieren der (aktuellen) dreidimensionalen Form der zweiten Formhälfte 64 ist deren Funktion als Gegenhalter verbessert und eine gleichmäßige Kraftableitung des beim Hinterspritzen auftretenden Drucks wird ermöglicht. Es versteht sich, dass alternativ die zweite Formhälfte 64 nicht adaptiv ausgebildet werden kann, was insbesondere günstig ist, wenn auf beiden Seiten des Werkstücks 2 Strukturelemente 71 angebracht werden sollen.

Alternativ zum Anbringen von Strukturelementen 71 in dem weiteren Bearbeitungsbereich 60 können diese ggf. auch in dem Trennbereich 4 an das Werkstück 2 angeheftet werden. Dies ist beispielsweise durch thermisches Aktivieren eines Grundwerkstoffs (Schweißen) oder eines Zusatzwerkstoff (Löten, Sintern) oder durch chemisches und/oder thermisches Aktivieren (Kleben) möglich. Auch im Umformbereich 12 können Strukturelemente z.B. aus Kunststoff gegen das Werkstück 2 angepresst werden, wobei sich diese aufgrund der Erwärmung des Werkstücks 2 mit dem Werkstück 2 zu einer Verbundstruktur verbinden können.

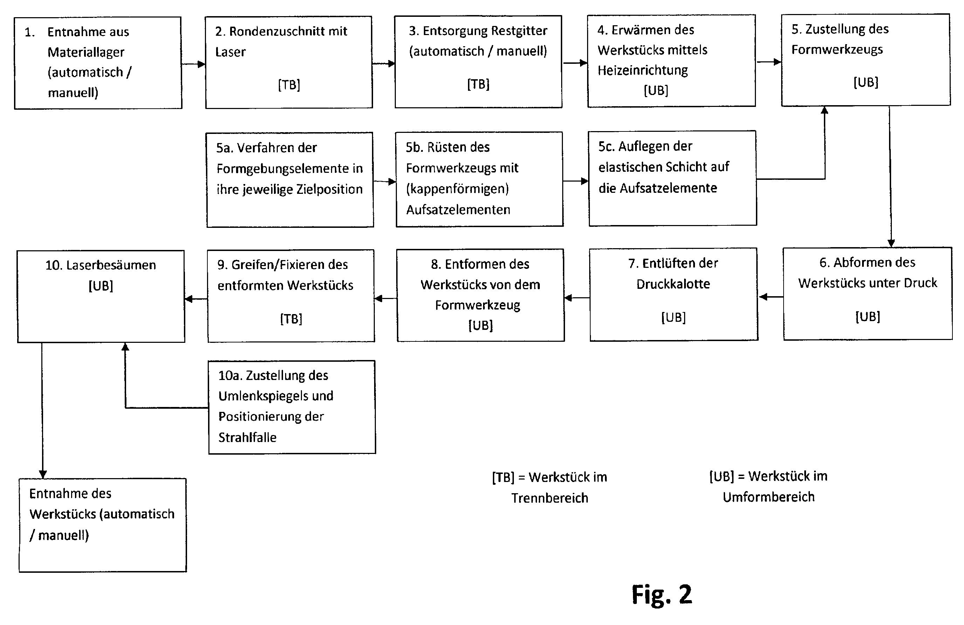

**Fig. 2** zeigt ein Flussdiagram eines Beispiels für einen Bearbeitungsprozess, wie er an der Bearbeitungsmaschine 1 von Fig. 1 durchgeführt werden kann. Einzelne Schritte des Bearbeitungsprozesses werden im Zusammenhang mit Fig. 3 bis Fig. 10 näher erläutert.

In einem ersten Schritt wird das thermoplastisch verformbare, plattenartige Werkstück (Organoblech) mittels der Zuführeinrichtung oder ggf. manuell aus einem Materiallager der Bearbeitungsmaschine 1 zugeführt und auf dem Positioniertisch 3 abgelegt, und zwar im Bereich der verschließbaren Öffnung 21. In einem zweiten Schritt, der schematisch in **Fig. 3** dargestellt ist, wird das Werkstück 2 im Trennbereich 4 mittels der Laserschneideinrichtung 5 zugeschnitten. Beim Zuschneiden des Werkstücks 2 entsteht eine Schnittkontur 30 (Ronde), die im Wesentlichen einer ebenen Abwicklung der gewünschten dreidimensionalen Zielform des Werkstücks 2 (bis auf definierte Toleranzen) entspricht. Der Laserstrahl 10 tritt durch die (in Fig. 3 nicht gezeigte) Öffnung 21 hindurch und wird von der Strahlfalle 8 aufgefangen. Ein Durchfallen des zugeschnittenen Werkstücks 2 kann beispielsweise durch ein Restgitter und/oder eine geeignete Spannvorrichtung oder durch Schneiden auf einer in die Öffnung 21 eingebrachten Unterlage verhindert werden. Zum Schutz von Bedienpersonen bei der Laserbearbeitung können an der Bearbeitungsmaschine 1 nicht dargestellte Abschirmungseinrichtungen vorgesehen sein.

Die Bestimmung der gewünschten Schnittkontur 30 kann durch die computergestützte Steuerungseinrichtung 50 erfolgen, in der die Informationen über die gewünschte dreidimensionale Zielgeometrie des Werkstücks 2, beispielsweise in Form eines CAD-Datensatzes, gespeichert oder anderweitig verfügbar sind. Die Steuerungseinrichtung 50 generiert aus den Informationen über die Zielgeometrie die gewünschte Schnittkontur 30 und steuert die Laserschneideinrichtung 5 beim Zuschneiden des Werkstücks 2 entsprechend. Zur verbesserten bzw. vereinfachten Positionierung des Werkstücks 2 beim Zuschneiden kann durch die Steuerungseinrichtung 50 ferner ein Referenzpunkt am Werkstück 2 generiert werden.

In einem dritten Schritt wird im Trennbereich 4 das beim Zuschneiden entstandene, die Schnittkontur 30 umgebende Restgitter automatisch oder manuell entfernt und entsorgt. Nachfolgend wird der Positioniertisch 3 mit dem darauf gelagerten, von der Schnittkontur 30 berandeten Werkstück 2 von dem Trennbereich 4 in den Umformbereich 12 bewegt. Des Weiteren wird in einem vierten Schritt in dem Umformbereich 12 das umzuformende Werkstück 2 mittels einer Heizeinrichtung 14 erwärmt, wie in **Fig.** 4 gezeigt ist. Hierzu wird eine als halbkugelförmige Druckkalotte ausgebildete Druckkammer 32 der Druckerzeugungseinrichtung 16 von oberhalb des Positioniertisches 3 auf das Werkstück 2 abgesenkt, so dass ein umlaufender Rand 40 der Druckkalotte dichtend an dem Werkstück 2 anliegt, wodurch im Inneren der Druckkammer 32 ein Druckraum 33 ausgebildet wird. Zum Erwärmen des Werkstücks 2 dient eine Heizeinrichtung 14, welche in der Druckkammer 32 angeordnet ist. Bei der Heizeinrichtung 14 der Fig. 4 handelt es sich um eine Wärmestrahler-Anordnung mit mehreren Wärmestrahlern, die z.B. als Diodenlaser ausgebildet sein können und Strahlung im IR-Bereich abgeben. Die Verwendung mehrerer als Matrix angeordneter Wärmestrahler ermöglicht eine zeitliche und räumliche Steuerung der Wärmezufuhr, so dass Bereiche des Werkstücks 2 mit einem hohen Umformungsgrad anders behandelt (stärker mit Wärme beaufschlagt) werden können als solche mit niedrigem Umformgrad. Insbesondere können die Wärmestrahler der Wärmestrahler-Anordnung 14 IR-Strahlung mit einer individuell einstellbaren bzw. durchstimmbaren Wellenlänge aufweisen. Als WärmestrahlungsEinrichtung bzw. -Anordnung kann alternativ oder zusätzlich auch eine Laser-Strahlungsquelle vorgesehen sein, die beispielsweise einen Laserstrahl oder mehrere Laserstrahlen im nah- oder ferninfraroten Bereich erzeugt und auf das Werkstück 2 ausrichtet, um dieses zu erwärmen. Alternativ oder zusätzlich kann als Heizeinrichtung eine Wärmekonvektionseinrichtung vorgesehen sein, welche ein Heizelement umfasst, um das Druckmedium zu erwärmen und dieses durch eine (ggf. erzwungene) Konvektion über die Werkstückoberfläche 35 zu leiten.

In einem sich anschließenden fünften Schritt wird das Formwerkzeug 15 in die Umformposition zugestellt, in welcher das Abformen des Werkstücks 2 erfolgt. Dem Zustellen des Formwerkzeugs 15 gehen typischerweise weitere Verfahrensschritte voraus, die zeitlich versetzt oder parallel zu den oben beschriebenen Verfahrensschritten (erster bis vierter Verfahrensschritt) durchgeführt werden können und welche die Vorbereitung des Formwerkzeugs 15 betreffen. Zur Vorbereitung des Formwerkzeugs 15 werden zunächst die Formgebungselemente 24 aus ihrer Ruheposition (z.B. bei Z=0 relativ zum Grundkörper 25) in die jeweils gewünschte Zielposition zᵢ bewegt und dort zugestellt (Schritt 5a). Dann werden die einzelnen Formgebungselemente 24 mit den entsprechenden Aufsatzelementen 26 bestückt und somit das Formwerkzeug 15 gerüstet, wozu Aufsatzelemente 26, die an dem Formwerkzeug 15 vorgesehen sind, ggf. durch Aufsatzelemente 26 aus dem Magazin 28 ersetzt werden (Schritt 5b). Die Aufsatzelemente 26 werden von der Steuerungseinrichtung 50 (vgl. Fig. 1) ausgewählt, so dass die Gesamtheit der Abformungsflächen 27 die Zielform bildet.

Auf die Abformungsflächen 27 der in der Zielposition zᵢ zugestellten Formgebungselemente 24 wird eine elastische bzw. dehnbare Schicht 31 (Diaphragma bzw. Membran) aufgelegt (Schritt 5c), wie nachfolgend anhand von **Fig. 5a,b** erläutert wird. Fig. 5a stellt das Formwerkzeug 15 in einer unterhalb des Positioniertisches 3 liegenden Ruheposition dar, in welcher das Rüsten mit den Aufsatzelementen 26 erfolgt ist. Zwischen dem in Fig. 5a nicht dargestellten Positioniertisch 3 und dem Formwerkzeug 15 ist die elastische Schicht 31 angeordnet, so dass diese bei einer Aufwärtsbewegung des Formwerkzeugs 15 in Z-Richtung von dem Formwerkzeug 15 erfasst werden kann. Die flexible Schicht 31 (Folie oder Decke) ist typischerweise durchgängig ausgebildet und passt sich an die Abformungsflächen 27 an (vgl. Fig. 5b), so dass die flexible Schicht 31 einer Spline-Interpolation der durch die Formgebungselemente 24 bzw. die Aufsatzelemente 26 gebildeten Stützstellen der Zielgeometrie entspricht. Zusätzlich stellt die flexible Schicht 31 eine Abdichtung gegen Verunreinigungen dar, die sich ansonsten ggf. zwischen den Formgebungselementen 24 bzw. Aufsatzelementen 26 ablagern könnten. In Fig. 5b ist der Drehteller 19 in einem verschlossenen Zustand (verschlossene Öffnung 21) dargestellt, da auf diesem das (nicht gezeigte) Werkstück 2 aufliegt, um auf die im Zusammenhang mit dem vierten Schritt erläuterte Weise erwärmt zu werden.

Nachdem das derart vorbereitete Formwerkzeug 15 in der Umformposition zugestellt worden ist, in der die Aufsatzelemente 26 oberhalb des Positioniertisches 3 angeordnet sind (vgl. **Fig. 6a****,b;** auch eine umgekehrte Anordnung ist grundsätzlich möglich und ggf. vorteilhaft), wird in einem sechsten Schritt das erwärmte Werkstück 2 abgeformt, indem dieses durch die Druckerzeugungseinrichtung 16 gegen das (einseitige) Formwerkzeug 15 angedrückt wird. Hierbei nimmt das Werkstück 2 die aus den einzelnen Abformungsflächen 27 zusammengesetzte bzw. der (in Fig. 6a,b nicht dargestellten) Schicht 31 entsprechende dreidimensionale Zielform an. Zum Andrücken des Werkstücks 2 gegen das Formwerkzeug 15 wird der Druckraum 33 der Druckerzeugungseinrichtung 16 mit einem gegenüber dem Umgebungsdruck erhöhten Druck beaufschlagt, indem diesem mittels eines Kompressors ein Druckmedium, z.B. Druckluft, zugeführt wird. Es versteht sich, dass die verschließbare Öffnung 21 des Drehtellers 19 für das Zustellen des Formwerkzeugs 15 in eine geöffnete Stellung verbracht wurde. Zur besseren Abdichtung des zwischen der Druckkalotte 32 und der Werkstückoberfläche 35 gebildeten Druckraums 33 ist zwischen dem unteren Rand der Druckkalotte 32 und der Werkstückoberfläche 35 eine Dichtungseinrichtung 36 (beispielsweise eine Silikondichtung) vorgesehen. Die Funktion der Dichtungseinrichtung 36 kann beim (Doppel-)Diaphragmaverfahren durch die in Fig. 5a gezeigte flexible Schicht 31 übernommen werden, so dass in diesem Fall eine Dichtungseinrichtung 36 als separates Bauteil entfallen kann. Der in dem Druckraum 33 erzeugte Überdruck wirkt isostatisch auf die gesamte von der Druckkalotte 32 erfasste Oberfläche 35 des Werkstücks 2 und bewirkt somit eine gleichmäßige Abformung des Werkstücks 2 gegen das Formwerkzeug 15.

Da zum Umformen des Werkstücks 2 ggf. ein Fließen des Werkstoffs erforderlich ist, welches durch die Verstärkungsfasern ggf. behindert wird, kann eine Relativbewegung zwischen dem Werkstück 2 und der Druckkalotte 32 bzw. dem Formwerkzeug 15 günstig sein. Eine solche Relativbewegung wird bei dem in Fig. 6a gezeigten Ausführungsbeispiel durch die Dichtung 36 behindert.

Um einer Relativbewegung zwischen dem Werkstück 2 und der Druckkalotte 32 in gewissen Grenzen nachzugeben, kann wie in Fig. 6b dargestellt entlang des Randes der Druckkalotte 32 eine elastische Membran 44 (Druckkissen), beispielsweise aus einem elastischen textilartigen Material gespannt sein, welche in der Druckkalotte 32 eine abgeschlossene Druckzelle 43 erzeugt, in die ein gasförmiges oder ggf. ein flüssiges Druckmedium eingebracht werden kann. Zur Erwärmung des Werkstücks 2 können in das Druckkissen 44 Heizelemente eingebracht werden, so dass dieses eine Heizeinrichtung bildet. Es versteht sich, dass ein Wärmeeintrag in das Werkstück 2 auch durch Aufheizung des Druckmediums außerhalb des Druckkissens 44 und/oder mit Hilfe einer Wärmestrahlungsquelle erfolgen kann. In letzterem Fall wird als elastische Membran 44 bevorzugt ein Material gewählt, welches für IR-Strahlung (im Wesentlichen) transparent ist. Auch kann ggf. in dem Druckkissen 44 selbst ein (z.B. flüssiges oder gummiartiges) Druckmedium vorhanden sein. In diesem Fall kann das Druckkissen beispielsweise mittels eines Stempels bzw. Presskolbens gegen das erwärmte Werkstück angedrückt werden (nicht dargestellt).

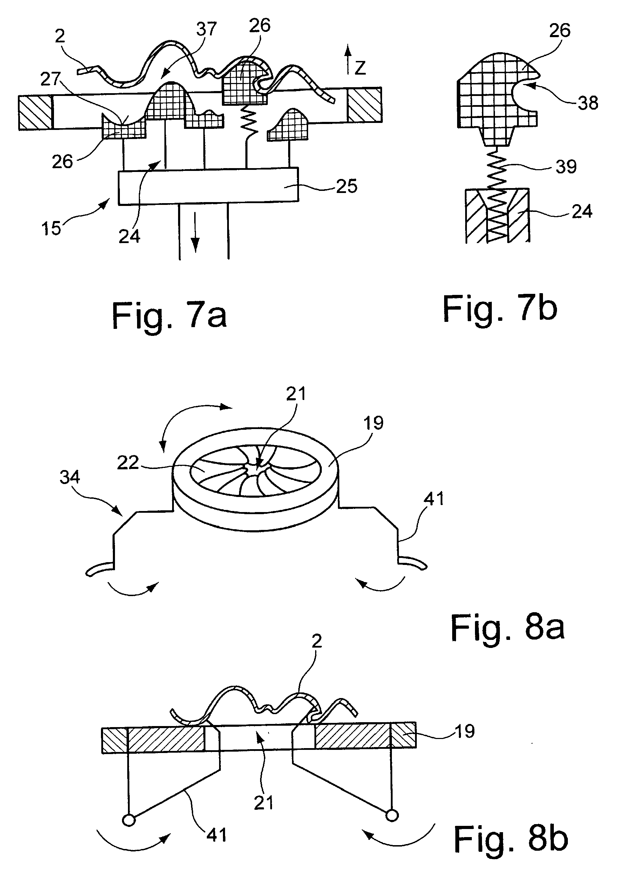

In einem sich anschließenden siebten Schritt des Verfahrens wird der erhöhte Druck in der Druckkammer 32 durch Entlüften abgebaut und in einem weiteren achten Schritt das Werkstück 2 von dem Formwerkzeug 15 entformt, wie nachfolgend anhand von **Fig. 7a,b** dargestellt wird. Für die Entformung werden Aufsatzelemente 26 bzw. Formgebungselemente 24, deren jeweilige Abformungsflächen 27 in einer typischerweise in Z-Richtung verlaufenden Entformungsrichtung keine Hinterschneidungen 38 aufweisen, in eine unterhalb der jeweiligen Zielposition Zᵢ liegende Entformungsposition verfahren, wobei das Verbringen in die Entformungsposition bei dem in Fig. 7a gezeigten Beispiel durch eine Relativverschiebung des Grundkörpers 25 des Formwerkzeugs 15 zum Werkstück 2 erfolgt. Es versteht sich, dass alternativ auch die einzelnen Formgebungselemente 24 individuell in eine jeweilige Entformungsposition bewegt werden können.

Durch das Verbringen der Formgebungselemente 24 in die Entformungsposition bildet sich ein Freiraum 37 zwischen der Unterseite des verformten Werkstücks 2 und den Abformungsflächen 27 der Aufsatzelemente 26, die keine Hinterschneidungen aufweisen. Wie in Fig. 7b gut zu erkennen ist, ist das Aufsatzelement 26, welches eine quer zur Entformungsrichtung verlaufende Hinterschneidung 38 aufweist, an dem zugehörigen Formgebungselement 24 über einer Federverbindung 39 gelagert, so dass dieses zunächst an dem umgeformten Werkstück 2 verbleibt. Unter Nutzung des gebildeten Freiraums 37 kann das Werkstück 2 von dem Aufsatzelement 26 mit der Hinterschneidung 38 gelöst werden, indem dieses automatisiert oder ggf. manuell geeignet positioniert wird.

Zum Entformen des Werkstücks 2 kann das federnd gelagerte Aufsatzelement 26 gedreht und/oder gekippt werden. Hierbei wird der Formschluss des Aufsatzelements 26 in einen Kraftschluss umgewandelt, der durch die zunehmende Federkraft beim Anheben des Aufsatzelements 26 vom Formgebungselement 24 überwunden wird, so dass dieses zum Formgebungselement 24 zurück gezogen wird. Die Feder 39, die in einem Hohlkanal des Formgebungselements 24 geführt ist, ermöglicht eine (Selbst-)Zentrierung des Aufsatzelements 26: Beim Zurückziehen greift eine an dem Aufsatzelement 26 gebildete Nase in eine komplementär geformte Ausnehmung des Formgebungselements 24 ein. Auch das federnd gelagerte Aufsatzelement 26 kann mittels der Wechseleinrichtung 29 ausgetauscht werden, indem dieses gemeinsam mit der Feder 39 vom Formgebungselement 24 gelöst wird oder indem die Federverbindung am der dem Aufsatzelement 26 zugewandten Seite der Feder 39 getrennt wird.

Alternativ zur in Fig. 7a,b gezeigten federnden Anbindung können Aufsatzelemente 26 mit Hinterschneidungen 38 zum Entformen vollständig von dem Formwerkzeug 15 gelöst werden, wobei das Lösen vom Formwerkzeug 15 durch die Steuerungseinrichtung 50 eingeleitet wird, z.B. indem diese eine Verriegelung einer rastenden Verbindung zwischen dem Aufsatzelement 26 und dem zugehörigen Formgebungselement 24 löst. Es versteht sich, dass auch in diesem Fall zunächst die Formgebungselemente 24 in eine Entformungsposition verbracht werden können.

Nun kann das entformte Werkstück 2 durch den verfahrbaren Positioniertisch 3 aus dem Umformbereich 12 in den Trennbereich 4 zurücktransferiert werden, wozu der Drehteller 19, genauer gesagt die an diesem vorgesehene Verschlussmechanik 22 die (Blenden-)Öffnung 21 teilweise oder ggf. vollständig verschließt, um das Werkstück 2 ablegen zu können, vgl. **Fig. 8a****,b.** Um das Werkstück 2 beim nachfolgenden Besäumen zu fixieren, ist an dem Drehteller 19 eine Greifeinrichtung 34 mit verschwenkbaren Greifarmen 41 vorgesehen, welche durch die teilweise geöffnete Öffnung 21 hindurch verschwenkt werden können, um das Werkstück in einem neunten Schritt des Verfahrens zu greifen bzw. zu fixieren.

Durch die Anbringung der Greifarme 41 an dem Drehteller 19 werden diese bei der Drehbewegung des Drehtellers 19 mitbewegt. Dadurch wird insbesondere verhindert, dass das umgeformte Werkstück 2 beim vollständigen Öffnen der im Drehteller 19 vorgesehenen Öffnung 21 unkontrolliert durch die Öffnung 21 herunterfällt.

Eine vollständig geöffnete Öffnung 21 ist für einen nachfolgenden zehnten Schritt günstig, bei dem das mittels der Greifeinrichtung 34 fixierte Werkstück 2 in dem Trennbereich 4 typischer Weise entlang seiner Außenkontur nachbearbeitet (besäumt) wird. Grundsätzlich ist es ebenso möglich, dass beim Nachbearbeiten Ausschnitte in das dreidimensional geformte Werkstück 2 eingebracht werden.

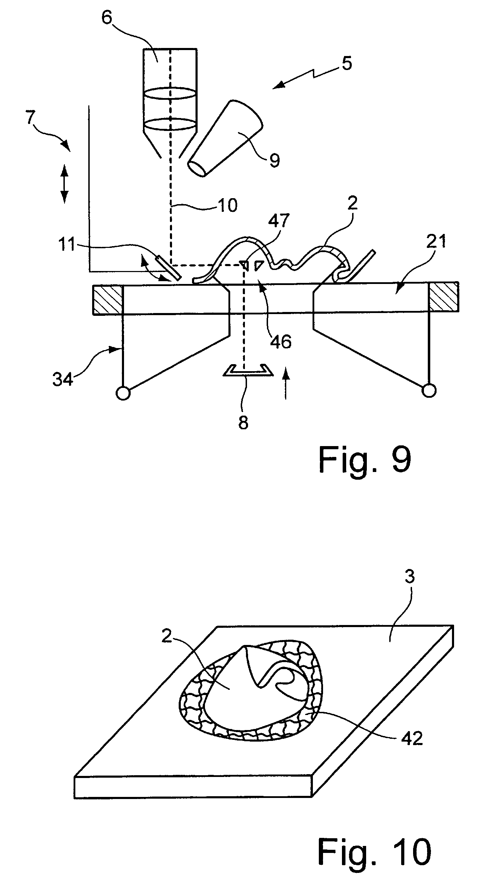

Wie in **Fig. 9** gezeigt ist, kann während des Nachbearbeitungs-Schritts im Trennbereich 4 die Strahlumlenkeinrichtung 7 den Laserstrahl 10 der Laserschneideinrichtung 5 derart umlenken, dass eine hochpräzise Nachbearbeitung des Werkstücks 2 erfolgt. Dabei kann der Umlenkspiegel 11 der Strahlumlenkeinrichtung 7 genutzt werden, um den Laserstrahl 10 auf eine gewünschte Stelle an dem Werkstück 2 umzulenken sowie diesen entlang einer gewünschten Strahlrichtung z.B. parallel zur Auflageebene (XY-Ebene) auszurichten. Durch eine Verschiebung bzw. Zustellung des Umlenkspiegels 11 in Z-Richtung, die Verkippung des Umlenkspiegels 11, die Bewegung des Positioniertisches 3 in der XY-Ebene sowie die Drehung des Werkstücks 2 um die Drehachse 20 kann eine 5-achsige Bewegung realisiert werden, welche die Ausbildung einer in der Regel dreidimensional im Raum verlaufenden Schnittfuge ermöglicht, um einen Randbereich 42 von dem Werkstück 2 abzutrennen, wie in **Fig. 10** dargestellt ist.

Eine weitere, der Strahlfalle 8 zugeordnete Strahlumlenkeinrichtung 46, welche im vorliegenden Beispiel ein konisches Umlenkprisma 47 aufweist, wird mittels eines nicht gezeigten Antriebs durch die Öffnung 21 auf die Oberseite des Positioniertisches 3 verbracht, um den Laserstrahl 10, nachdem dieser das Werkstück 2 durchlaufen hat, zur Strahlfalle 8 umzulenken. Die Strahlfalle 8 kann während des Besäumens innerhalb des Trennbereichs 4 fortlaufend an unterschiedlichen Stellen positioniert bzw. zugestellt werden.

Fig. 10 zeigt schließlich das gemäß dem Verfahren von Fig. 2 hergestellte dreidimensionale Werkstück 2 mit dem beim Besäumen zurückgebliebenen Restgitter 42, welches zusammen mit dem fertigen Werkstück 2 auf dem Positioniertisch 3 aufliegt. Aus der dargestellten Position kann das fertige Werkstück 2 mittels einer Entnahmeeinrichtung automatisch oder manuell aus der Bearbeitungsmaschine 1 entfernt werden oder an den weiteren Bearbeitungsbereich 60 verbracht werden, um mit Strukturelementen versehen zu werden.

## Patentansprüche

1. Bearbeitungsmaschine (1) zum Bearbeiten eines thermoplastisch verformbaren, bevorzugt plattenartigen Werkstückes (2), insbesondere aus faserverstärktem Kunststoff, umfassend:
eine Trenneinrichtung, insbesondere eine Laserschneideinrichtung (5), zum trennenden Bearbeiten des Werkstücks (2) in einem ortsfesten Trennbereich (4), eine Umformeinrichtung (13) zum Thermoformen des Werkstücks (2) in einem ortsfesten Umformbereich (12), sowie
eine Werkstückauflage (3) zur Lagerung des Werkstücks (2), wobei die Werkstückauflage (3) zum Transportieren des Werkstücks (2) von dem Trennbereich (4) in den Umformbereich (12) und zurück verfahrbar ist, und wobei die Werkstückauflage (3) eine verschließbare Öffnung (21) aufweist, um das Werkstück (2) beim Thermoformen zwischen einem Formwerkzeug (15) zum Abformen des Werkstücks (2) und einer Druckerzeugungseinrichtung (16) zum Andrücken des Werkstücks (2) gegen das Formwerkzeug (15) zu lagern, die auf unterschiedlichen Seiten der Werkstückauflage (3) angebracht sind.

2. Bearbeitungsmaschine nach Anspruch 1, bei der das Formwerkzeug (15) und/oder die Druckerzeugungseinrichtung (16) zum Thermoformen des Werkstücks (2) entlang einer Hubachse (23) in eine Umformposition verfahrbar sind.

3. Bearbeitungsmaschine nach Anspruch 2, bei der das Formwerkzeug (15) zum Austauschen von kappenförmigen Aufsatzelementen (26), die an Formgebungselementen (24) des Formwerkzeugs (15) gebildet sind, in eine Ruheposition unterhalb der Werkstückauflage (3) verfahrbar ist.

4. Bearbeitungsmaschine nach einem der vorhergehenden Ansprüche, bei der die Werkstückauflage (3) für die trennende Bearbeitung des Werkstücks (2) in dem Trennbereich (4) eine Dreheinrichtung (18) zur Drehung eines Teilbereichs (19) der Werkstückauflage (3) um eine Drehachse (20) senkrecht zur Auflageebene

5. Bearbeitungsmaschine nach Anspruch 4, bei der die verschließbare Öffnung (21) in dem drehbaren Teilbereich (19) der Werkstückauflage (3) gebildet ist.

6. Bearbeitungsmaschine nach einem der vorhergehenden Ansprüche, weiter umfassend: eine Einrichtung (61) zum Anbringen mindestens eines Strukturelements (71) an dem thermogeformten Werkstück (2).

7. Bearbeitungsmaschine nach Anspruch 6, bei der die Einrichtung (61) eine adaptive Formhälfte (64) zum einseitigen Gegenhalten beim Anbringen des mindestens einen Strukturelements (71) an dem thermogeformten Werkstück (2) umfasst.

## Claims

1. Processing machine (1) for processing a thermoplastically deformable, preferably plate-like workpiece (2), in particular of fibre-reinforced plastics material, comprising:
a separation device, in particular a laser cutting device (5), for the separating processing of the workpiece (2) in a fixed separation region (4), a forming device (13) for thermoforming the workpiece (2) in a fixed forming region (12), and
a workpiece support (3) for supporting the workpiece (2), wherein the workpiece support (3) can be displaced in order to transport the workpiece (2) from the separation region (4) into the forming region (12) and back,
and wherein the workpiece support (3) has a closable opening (21) in order to support the workpiece (2) during thermoforming between a forming tool (15) for forming the workpiece (2) and a pressure production device (16) for pressing the workpiece (2) against the forming tool (15) which are arranged at different sides of the workpiece support (3).

2. Processing machine according to claim 1, wherein the forming tool (15) and/or the pressure production device (16) can be displaced for thermoforming the workpiece (2) along a lifting axis (23) into a forming position.

3. Processing machine according to claim 2, wherein the forming tool (15) can be displaced in order to replace caplike attachment elements (26) which are formed on forming elements (24) of the forming tool (15) into a rest position below the workpiece support (3).

4. Processing machine according to any one of the preceding claims, wherein the workpiece support (3) has for the separating processing of the workpiece (2) in the separation region (4) a rotation device (18) for rotating a part-region (19) of the workpiece support (3) about a rotation axis (20) perpendicular relative to the support plane (17).

5. Processing machine according to claim 4, wherein the closable opening (21) is formed in the rotatable part-region (19) of the workpiece support (3).

6. Processing machine according to any one of the preceding claims, further comprising: a device (61) for fitting at least one structural element (71) to the thermoformed workpiece (2).

7. Processing machine according to claim 6, wherein the device (61) comprises an adaptive mould half (64) for single-sided retention when fitting the at least one structural element (71) to the thermoformed workpiece (2).

## Revendications

1. Machine de traitement (1) pour le traitement d'une pièce (2) à déformation thermoplastique, de préférence en forme de plaque, en particulier en matière plastique renforcée par fibres, comprenant :
un dispositif de séparation, en particulier un dispositif de découpe laser (5) pour la séparation de la pièce (2) dans une zone de séparation fixe (4), un dispositif de déformation (13) pour le thermoformage de la pièce (2) dans une zone de déformation fixe (12), ainsi qu'un support de pièce (3) pour loger la pièce (2), ce support (3) étant mobile pour le transport de la pièce (2) depuis la zone de séparation (4) jusqu'à la zone de déformation (12) et en retour, le support de pièce (3) présentant une ouverture obturable (21) pour loger la pièce (2) pendant le thermoformage entre un outil de formage (15) pour la déformation de la pièce (2) et un dispositif de génération de pression (16) pour serrer la pièce (2) contre l'outil de formage (15), placés sur différents côtés du support de la pièce (3).

2. Machine de traitement conformément à la revendication 1, dans laquelle l'outil de formage (15) et/ou le dispositif de génération de pression (16) pour le thermoformage de la pièce (2) peuvent se déplacer le long d'un axe de levage (23) dans une position de déformation.

3. Machine de traitement conformément à la revendication 2, dans laquelle l'outil de formage (15) pour le remplacement d'éléments de support en cuvette (26) montés sur les éléments de formage (24) de l'outil de formage (15) peut se déplacer dans une position d'arrêt sous le support de pièce (3).

4. Machine de traitement conformément à l'une des revendications précédentes, dans laquelle le support de pièce (3) pour le processus de séparation de la pièce (2) présente, dans la zone de séparation (4), un dispositif de rotation (18) pour la rotation d'une partie (19) du support de pièce (3) autour d'un axe de rotation (20) perpendiculaire à la surface du support (17).

5. Machine de traitement conformément à la revendication 4, dans laquelle l'ouverture obturable (21) est montée dans la partie rotative (19) du support de pièce (3).

6. Machine de traitement conformément à l'une des revendications précédentes, comprenant également : un dispositif (61) permettant de fixer au moins un élément de structure (71) sur la pièce thermoformée (2).

7. Machine de traitement conformément à la revendication 6, dans laquelle le dispositif (61) comprend un demi-moule adaptatif (64) pour maintenir contre un côté, lors de la fixation d'au moins un élément de structure (71) sur la pièce thermoformée (2).
